(19) Europäisches Patentamt
European Patent Office
Office européen des brevets

(11) **EP 2 913 998 B1**

(12) **EUROPEAN PATENT SPECIFICATION**

(45) Date of publication and mention of the grant of the patent:
**03.10.2018 Bulletin 2018/40**

(21) Application number: **15156302.0**

(22) Date of filing: **24.02.2015**

(51) Int Cl.:
*H04N 13/00* (2018.01)          *G06T 7/00* (2017.01)
*G08G 1/16* (2006.01)

(54) **Disparity value deriving device, equipment control system, movable apparatus, robot, disparity value deriving method, and computer-readable storage medium**

Disparitätswertableitungsvorrichtung, Ausrüstungssteuerungssystem, bewegliche Vorrichtung, Roboter, Disparitätswertableitungsverfahren und computerlesbares Speichermedium

Dispositif de dérivation d'une valeur de disparité, système de commande d'équipement, appareil mobile, robot, procédé de dérivation d'une valeur de disparité et support de stockage lisible par ordinateur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2014 JP 2014039255**
**15.01.2015 JP 2015006165**

(43) Date of publication of application:
**02.09.2015 Bulletin 2015/36**

(73) Proprietor: **Ricoh Company, Ltd.**
**Tokyo 143-8555 (JP)**

(72) Inventors:
• **Zhong, Wei**
**Tokyo, 143-8555 (JP)**
• **Watanabe, Yoshikazu**
**Tokyo, 143-8555 (JP)**
• **Yokota, Soichiro**
**Tokyo, 143-8555 (JP)**
• **Saito, Kiichiroh**
**Tokyo, 143-8555 (JP)**
• **Tamura, Ryohsuke**
**Tokyo, 143-8555 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

(56) References cited:
**JP-A- 2012 181 142      US-A1- 2013 010 073**

• HIRSCHMULLER H: "Stereo Processing by Semiglobal Matching and Mutual Information", IEEE TRANSACTIONS ON PATTERN ANALYSIS AND MACHINE INTELLIGENCE, IEEE COMPUTER SOCIETY, USA, vol. 30, no. 2, 1 February 2008 (2008-02-01), pages 328-341, XP011246438, ISSN: 0162-8828
• MINGLUN GONG ET AL: "Real-Time Stereo Matching Using Orthogonal Reliability-Based Dynamic Programming", IEEE TRANSACTIONS ON IMAGE PROCESSING, IEEE SERVICE CENTER, PISCATAWAY, NJ, US, vol. 16, no. 3, 1 March 2007 (2007-03-01), pages 879-884, XP011165356, ISSN: 1057-7149, DOI: 10.1109/TIP.2006.891344
• BROWN M Z ET AL: "Advances in computational stereo", IEEE TRANSACTIONS ON PATTERN ANALYSIS AND MACHINE INTELLIGENCE, IEEE COMPUTER SOCIETY, USA, vol. 25, no. 8, 1 August 2003 (2003-08-01) , pages 993-1008, XP011099378, ISSN: 0162-8828, DOI: 10.1109/TPAMI.2003.1217603
• GONG ET AL: "Fast stereo matching using reliability-based dynamic programming and consistency constraints", PROCEEDINGS OF THE EIGHT IEEE INTERNATIONAL CONFERENCE ON COMPUTER VISION. (ICCV). NICE, FRANCE, OCT. 13 - 16, 2003; [INTERNATIONAL CONFERENCE ON COMPUTER VISION], LOS ALAMITOS, CA : IEEE COMP. SOC, US, 13 October 2003 (2003-10-13), pages 610-617vol.1, XP031213104, ISBN: 978-0-7695-1950-0

- HIRSCHMULLER H: "Accurate and Efficient Stereo Processing by Semi-Global Matching and Mutual Information", PROCEEDINGS / 2005 IEEE COMPUTER SOCIETY CONFERENCE ON COMPUTER VISION AND PATTERN RECOGNITION, CVPR 2005 : [20 - 25 JUNE 2005, SAN DIEGO, CA], IEEE, PISCATAWAY, NJ, USA, vol. 2, 20 June 2005 (2005-06-20), pages 807-814, XP010817537, DOI: 10.1109/CVPR.2005.56 ISBN: 978-0-7695-2372-9

## Description

FIELD OF THE INVENTION

The present invention relates to a disparity value deriving device, an equipment control system, a movable apparatus, a robot, a disparity value deriving method, and a computer-readable storage medium.

BACKGROUND OF THE INVENTION

In recent years, vehicle-mounted systems have generally been used for preventing automobile collisions by measuring the distance between automobiles or the distance between an automobile and an obstacle. A stereo matching process using the principle of triangulation using a stereo camera has been used as a method of measuring the distance. The stereo matching process is a process of obtaining disparity by matching corresponding pixels between a reference image captured by one of two cameras of a stereo camera and a comparison image captured by the other camera, and calculating the distance between the stereo camera and an object included in the images from the disparity. The calculation of the distance to an object by this stereo matching process using a stereo camera enables a variety of recognition processing, and brake control and steering control for preventing collisions.

The stereo matching process as described above includes the block matching method in which, in order to evaluate the similarity between images, regions are cut out from the images to be compared and, for example, the sum of absolute differences (SAD) of luminance, the sum of squared differences (SSD), and the zero-mean normalized cross-correlation (ZNCC) are obtained for the regions. However, it is difficult to extract image features in a portion where texture in terms of variances in luminance of objects in an image is weak, and the block matching method may not provide accurate disparity. A technique is then proposed as a method for deriving precise disparity, in which not only the cost of a pixel in a comparison image for a corresponding reference pixel in a reference image but also the costs of pixels in the neighborhood of the pixel in the comparison image are aggregated to derive disparity for an object with weak texture (see Japanese Patent Application Laid-open No. 2012-181142).

However, with the technique described in Japanese Patent Application Laid-open No. 2012-181142, a matching error may occur if a stereo matching process is performed on a region with occlusion, which is a region displayed in one of a reference image and a comparison image captured from different points of view, but not displayed in the other image.

Therefore, there is a need to provide a disparity value deriving device, an equipment control system, a movable apparatus, a robot, a disparity value deriving method, and a computer-readable storage medium for preventing a matching error in a stereo matching process.

HIRSCHMUELLER H: "Stereo Processing by Semiglobal Matching and Mutual Information",IEEE TRANSACTIONS ON PATTERN ANALYSIS AND MACHINE INTELLIGENCE, IEEE COMPUTER SOCIETY, USA, vol. 30, no. 2, 1 Ferburary 2008 (2008-02-01), pages 328-341, XP011246438 discloses a method for stereo processing by semiglobal matching and mutual information which does not consider reliability.

MINGLUN GONG ET AL: "Real-Time Stereo Matching Using Orthogonal Reliability-Based Dynamic Programming",IEEE TRANSACTIONS ON IMAGE PROCESSING, IEEE SERVICE CENTER, PISCATAWAY, NJ, US, vol. 16, no. 3, 1 March 2007 (2007-03-01), pages 879-884, XP011165356,ISSN: 1057-7149, DOI: 10.1109/TIP.2006.891344 discloses real-time stereo matching using orthogonal reliability-based dynamic programming in which a reliability-based threshold is computed for filtering out potential mismatches.

BROWN M Z ET AL: "Advances in computational stereo", IEEE TRANSACTIONS ON PATTERN ANALYSIS AND MACHINE INTELLIGENCE, IEEE COMPUTER SOCIETY, USA, vol. 25, no. 8, 1 August 2003 (2003-08-01), pages 993-1008, XP011099378 discloses determination of occluded regions in computational stereo images, and excluding such occluded regions from the further data processing.

SUMMARY OF THE INVENTION

It is an object of the present invention to at least partially solve the problems in the conventional technology.

The invention is defined by the independent claims. The dependent claims define preferred embodiments of the invention.

BRIEF DESCRIPTION OF THE DRAWINGS

FIG. 1 is an illustration of the principle of deriving the distance from an imaging device to an object;
FIG. 2 illustrates (a) an example of a reference image, (b) an example of a high density disparity image, and (c) an example of an edge disparity image;

FIG. 3 illustrates a calculation of a cost while successively shifting candidates for a corresponding pixel in a comparison image relative to a reference image;

FIG. 4 is a graph illustrating costs with respect to shift amounts;

FIG. 5 is a conceptual diagram for deriving a synthesized cost;

FIG. 6 is a graph illustrating synthesized costs with respect to disparity values;

FIG. 7 illustrates an automobile equipped with a disparity value deriving device according to an embodiment of the present invention;

FIG. 8 is a schematic diagram of the object recognition system;

FIG. 9 is an overall hardware configuration diagram of the object recognition system;

FIG. 10 is a diagram illustrating an example of the block configuration of the disparity value deriving device according to the present embodiment;

FIG. 11 illustrates occurrence of occlusion in a reference image and a comparison image;

FIG. 12 illustrates setting of reliability in a case where costs are aggregated in the leftward direction;

FIG. 13 illustrates setting of reliability in a case where costs are aggregated in the rightward direction;

FIG. 14 is a graph illustrating the relation between shift amounts and path costs in the r direction in the present embodiment;

FIG. 15 illustrates an example of the configuration of a leftward-direction reliability table and a rightward-direction reliability table;

FIG. 16 is a graph illustrating the relation between shift amounts and synthesized costs in the present embodiment;

FIG. 17 is a diagram illustrating subpixel estimation by parabola fitting;

FIG. 18 is a diagram illustrating subpixel estimation by the least-squares method;

FIG. 19 is a conceptual diagram illustrating a high density disparity image using the subpixel estimation; and

FIG. 20 is a diagram illustrating an example of the operation procedure of a stereo matching process of the disparity value deriving device according to the present embodiment; and

FIG. 21 illustrates an example of an equipment control system in the present embodiment mounted on a vehicle.

DETAILED DESCRIPTION OF THE PREFERRED EMBODIMENTS

Embodiments of the present invention will be described below with reference to the accompanying drawings.

Overview of Distance Measurement Method Using SGM Method

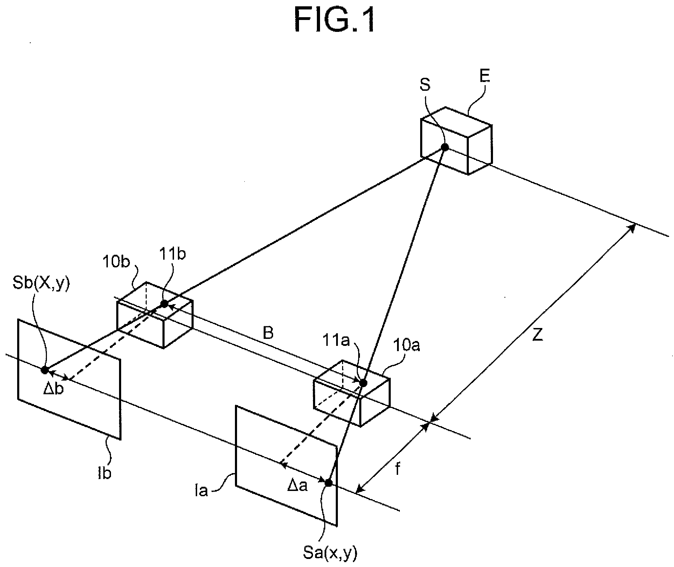

Referring first to FIG. 1 to FIG. 6, an overview of a distance measurement method using the semi-global matching (SGM) method will be described. The SGM method is disclosed in Accurate and Efficient Stereo Processing by Semi-Global Matching and Mutual Information) and a brief explanation is given below.

Principle of Distance Measurement

Referring to FIG. 1, the principle of measuring the distance from a stereo camera to an object will be described, in which disparity of the object is derived as a disparity value by conducting stereo imaging using the stereo camera, and the disparity value is used to measure the distance from the stereo camera to the object. FIG. 1 is an illustration of the principle of deriving the distance from imaging devices to an object. The following description explains processes with respect to each single pixel rather than with respect to each predetermined region including a plurality of pixels, to make the explanation simpler. When the process is performed not in units of single pixels but in units of predetermined regions each including a plurality of pixels, the predetermined region that includes a reference pixel is denoted as a reference region, and the predetermined region that includes a corresponding pixel is denoted as a corresponding region. The reference region may include a reference pixel alone and the corresponding region may include a corresponding pixel alone.

Disparity Value Calculation

The images captured by an imaging device 10a and an imaging device 10b illustrated in FIG. 1 are denoted as a reference image Ia and a comparison image Ib, respectively. In FIG. 1, the imaging device 10a and the imaging device 10b are installed parallel and at the same height. In FIG. 1, a point S on an object E in a three-dimensional space is captured at one position of the imaging device 10a and also at one position of the imaging device 10b, wherein these two positions are on the same horizontal line of the imaging device 10a and the imaging device 10b. That is, the point S in each image is captured at a point Sa(x,y) in the reference image Ia and a point Sb(x,y) in the comparison image Ib. Here, the disparity value Δ is expressed as Equation (1) using Sa(x,y) in the coordinates of the imaging device 10a and Sb(X,y) in the coordinates of the imaging device 10b.

$$\Delta = X - x \qquad\qquad (1)$$

Here, as in the case of FIG. 1, the disparity value is written as Δ = Δa + Δb, where Δa is the distance between the point Sa(x,y) in the reference image Ia and the point of intersection of the normal extending from the imaging lens 11a to the imaging surface, and Δb is the distance between the point Sb(X,y) in the comparison image Ib and the point of intersection of the normal extending from the imaging lens 11b to the imaging surface.

Distance Calculation

The distance Z from the imaging devices 10a, 10b to the object E can be derived using the disparity value Δ. Specifically, the distance Z is the distance from the plane including the focus position of the imaging lens 11a and the focus position of the imaging lens 11b to a particular point S on the object E. As illustrated in FIG. 1, the distance Z can be calculated by Equation (2) using the focal length f of the imaging lens 11a and the imaging lens 11b, the base line length B that is the length between the imaging lens 11a and the imaging lens 11b, and the disparity value Δ.

$$Z = (B \times f)/\Delta \qquad\qquad (2)$$

From Equation (2), the greater the disparity value Δ is, the smaller the distance Z is, and the smaller the disparity value Δ is, the greater the distance Z is.

SGM Method

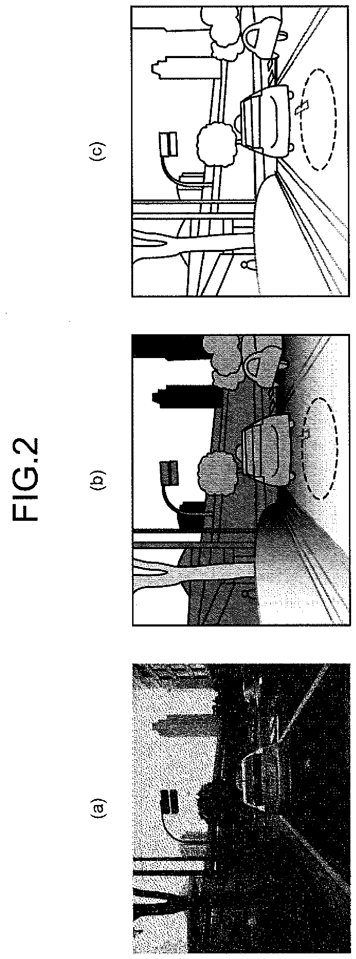

Referring now to FIG. 2 to FIG. 6, a distance measurement method using the SGM method will be described. FIG. 2(a) is a conceptual diagram illustrating a reference image, FIG. 2(b) is a conceptual diagram illustrating a high density disparity image for FIG. 2(a), and FIG. 2(c) is a conceptual diagram illustrating an edge disparity image for FIG. 2(a). Here, the reference image is an image representing an object by luminance. The high density disparity image is an image that is derived from the reference image by the SGM method and represents the disparity value at each set of coordinates in the reference image. The edge disparity image is an image that is derived by the conventionally used block matching method and represents the disparity values only at a part with relatively strong texture such as an edge in the reference image.
The SGM method is a method of deriving the disparity values appropriately even for an object with weak texture and deriving the high density disparity image illustrated in FIG. 2(b) based on the reference image illustrated in FIG. 2(a). When the block matching method is used, the edge disparity image illustrated in FIG. 2(c) is derived based on the reference image illustrated in FIG. 2(a). As can be understood by comparing the ovals enclosed by the broken lines in FIG. 2(b) and FIG. 2(c), compared with the edge disparity image, the high density disparity image can represent detailed information such as a road with weak texture and therefore enables distance measurement in more detail.
In the SGM method, a disparity value is derived by calculating a cost and thereafter further calculating a synthesized cost that is synthesized dissimilarity, rather than deriving a disparity value immediately after calculating a cost that is dissimilarity. In this method, a disparity image (here, high density disparity image) representing disparity values in almost all the pixels is finally derived. The block matching method is the same as the SGM method in that a cost is calculated. However, unlike the SGM method, the disparity values only at a part with relatively strong texture such as an edge are derived without synthesized costs being calculated.

Calculation of Cost

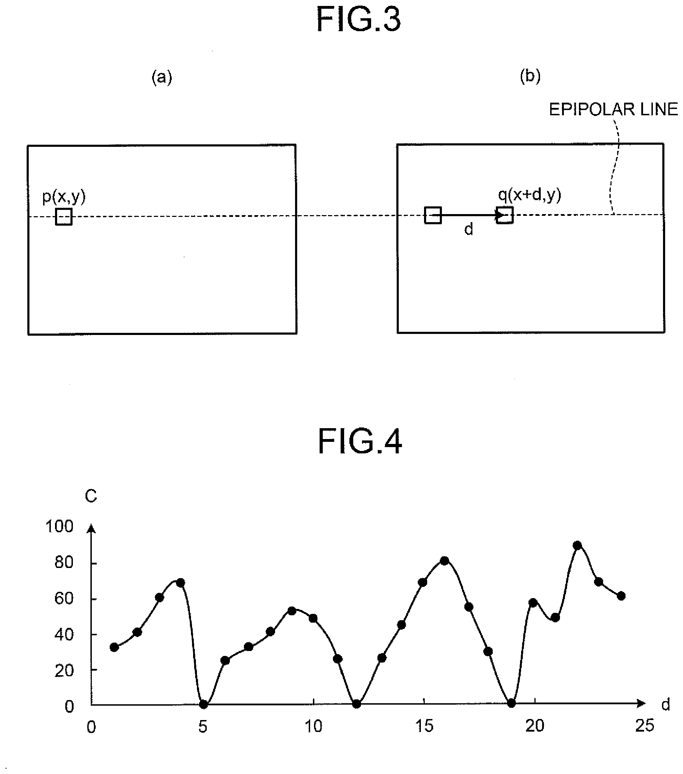

Referring first to FIG. 3 and FIG. 4, a method of calculating a cost C(p,d) will be described. In FIG. 3, (a) is a conceptual diagram illustrating a reference pixel in a reference image and (b) is a conceptual diagram of calculating costs while successively shifting (displacing) candidates for the corresponding pixel in a comparison image relative to the reference pixel in (a). FIG. 4 is a graph illustrating costs with respect to shift amounts. Here, the corresponding pixel is a pixel in the comparison image that is the most similar to the reference pixel in the reference image. In the following description, it is assumed that C(p,d) represents C(x,y,d).
As illustrated in (a) in FIG. 3, the cost C(p,d) of each candidate corresponding pixel q(x+d,y) that corresponds to the reference pixel p(x,y) is calculated based on the luminance values of a predetermined reference pixel p(x,y) in the reference image and of a plurality of candidate corresponding pixels q(x+d,y) on the epipolar line EL in the comparison image that corresponds to the reference pixel p(x,y). The variable d is a shift amount (displacement amount) of each candidate q for the corresponding pixel from the reference pixel p, and a shift amount is expressed in units of pixels in the present embodiments. That is, in FIG. 3, the cost C(p,d) that is dissimilarity in luminance value between a candidate corresponding pixel q(x+d,y) and the reference pixel p(x,y) is calculated while successively shifting the candidate corresponding pixels q(x+d,y) one pixel by one pixel in a predetermined range (for example, 0 < d < 25). A known method such as SAD (Sum of Absolute Difference) is applied as the method of calculating the cost C where the cost C denotes dissimilarity.

As illustrated in FIG. 4, the cost C(p,d) thus calculated can be expressed by a graph of a cost curve that is a set of the costs C with respect to shift amounts d. In FIG. 4, since the cost C is zero when the shift amount d = 5, 12, 19, the minimum value cannot be obtained. In the case of an object with weak texture, it is thus difficult to obtain the minimum value of the cost C.

Calculation of Synthesized Cost

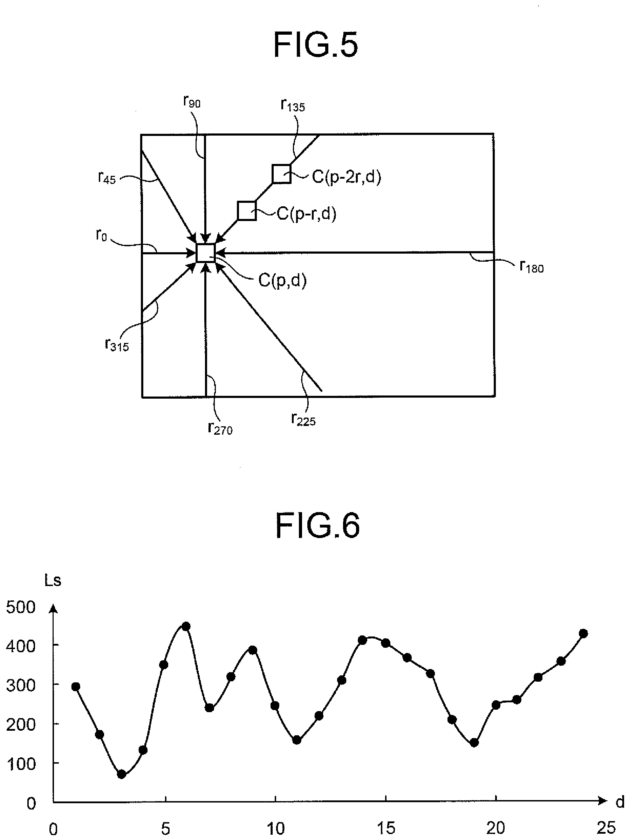

Referring now to FIG. 5 and FIG. 6, the method of calculating a synthesized cost Ls(p,d) will be described. FIG. 5 is a conceptual diagram for deriving a synthesized cost. FIG. 6 is a graph of a synthesized-cost curve illustrating synthesized costs with respect to disparity values.

In the method of calculating a synthesized cost in the present embodiments, the cost C(p,d) in the reference pixel p(x,y) is calculated, and costs for each one of pixels $p(x_n,y_n)$ existing near to far positions from the reference pixel p(x,y) is also calculated as costs C for each one of another reference pixels $p(x_n,y_n)$. With this configuration, the synthesized cost Ls(p,d) for the reference pixel p(x,y) is calculated by aggregating the calculated cost C(p,d) for the reference pixel p(x,y) and the calculated costs C for other reference pixels $p(x_n,y_n)$ existing near to far positions from the reference pixel p(x,y). Similarly, the synthesized cost Ls for each one of reference pixels $p(x_n,y_n)$ is calculated by aggregating the calculated cost C for one reference pixel $p(x_n,y_n)$ and the calculated costs C for other reference pixels existing near to far positions from the reference pixel $p(x_n,y_n)$.

The method of calculating a synthesized cost will now be described in more detail. In order to calculate the synthesized cost Ls(p,d), first, it is necessary to calculate a path cost Lr(p,d). Equation (3) is an equation for calculating the path cost Lr(p,d), and Equation (4) is an equation for calculating the synthesized cost Ls.

$$Lr(p,d) = C(p,d) + \min\{(Lr(p-r,d), Lr(p-r,d-1)+P1,$$

$$Lr(p-r,d+1) + P1, Lrmin(p-r) + p2\} \qquad (3)$$

Here, in Equation (3), r denotes a direction vector in the aggregation direction and has two components of the x direction and the y direction. The term min{} is a function for obtaining the minimum value. Lrmin(p-r) denotes the minimum value of Lr(p-r,d) when the shift amount d is changed in the coordinates in which p is shifted by one pixel in r direction. The path cost Lr is recurrently applied as expressed in Equation (3). P1 and P2 are fixed parameters set by experiment in advance such that the disparity values $\Delta$ of adjacent reference pixels on the path are likely to be continuous. For example, P1 = 48, P2 = 96. As expressed in Equation (3), the path cost Lr(p,d) is obtained by adding the minimum value of the path cost Lr of each pixel in the pixels in r direction illustrated in FIG. 5 to the cost C in the reference pixel p(x,y). As described above, in order to obtain Lr at each pixel in r direction, Lr is obtained first from the endmost pixel in r direction of the reference pixel p(x,y), and Lr is obtained along r direction. As illustrated in FIG. 5, $Lr_0$, $Lr_{45}$, $Lr_{90}$, $Lr_{135}$, $Lr_{180}$, $Lr_{225}$, $Lr_{270}$, $Lr_{315}$ in eight directions are obtained, and the synthesized cost Ls is eventually obtained based on Equation (4).

$$Ls(p, d) = \sum_8 Lr \qquad (4)$$

The synthesized cost Ls(p,d) thus calculated can be represented by a graph of a synthesized-cost curve representing the synthesized cost Ls(p,d) with respect to the shift amount d, as illustrated in FIG. 6. In FIG. 6, the synthesized cost Ls has the minimum value when the shift amount d = 3 and therefore is calculated as the disparity value $\Delta = 3$. Although the number of r is eight in the foregoing description, the number is not limited thereto. For example, the eight directions may be further divided by two into 16 directions or by three into 24 directions. Although being expressed as "dissimilarity", the cost C may be expressed as "similarity" that is a reciprocal of dissimilarity. In this case, a known method such as NCC (Normalized Cross Correlation) is applied as the method of calculating the cost C. In this case, the disparity value Δ not with the minimum but with the "maximum" synthesized cost Ls is derived. The similarity and the dissimilarity may be inclusively denoted as "matching degree".

Specific Description of Present Embodiments

Specific descriptions of the present embodiments are given below with reference to the drawings. Here, an object recognition system 1 mounted on an automobile will be described. The object recognition system 1 may be mountable not only on an automobile as an example of a vehicle but also on a motor bicycle, a bicycle, a wheelchair, and an agricultural cultivator as other examples of a vehicle. The object recognition system 1 may be mountable not only on a vehicle as an example of a movable apparatus but also on a robot as another example of a movable apparatus. The robot may not be a movable apparatus but may be an apparatus such as an industrial robot fixedly installed in FA (Factory Automation). The apparatus fixedly installed may not be a robot but may be a security monitoring camera.

Configuration of Embodiment

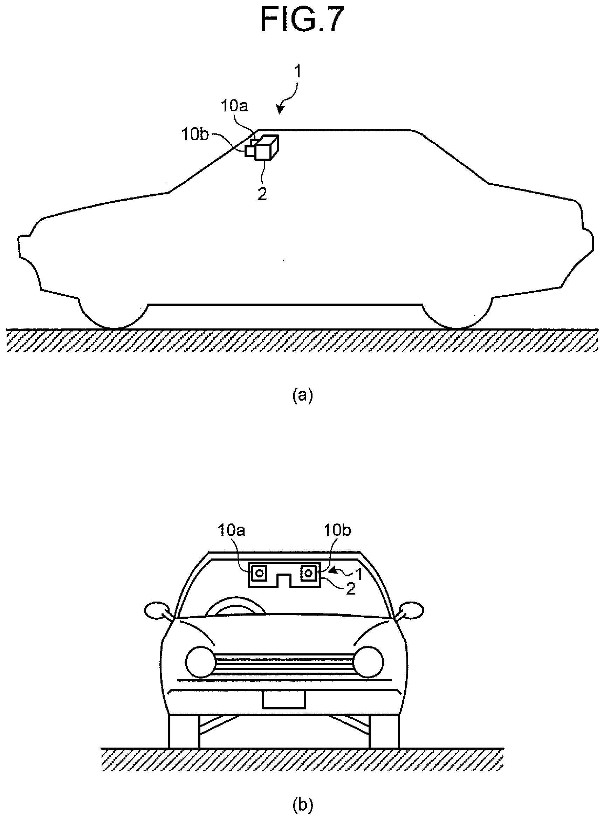

First, the overall configuration of each of the present embodiments will be described with reference to FIG. 7 to FIG. 9.

External Configuration

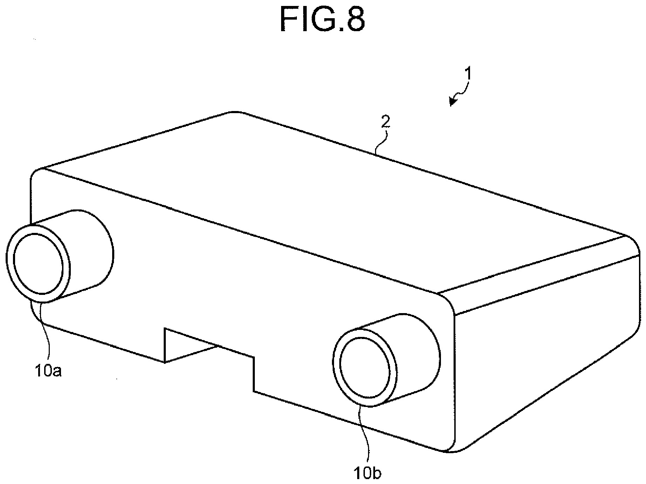

With reference to FIG. 7 and FIG. 8, an external configuration of the object recognition system 1 in the present embodiments will be described. FIG. 7(a) is a schematic diagram depicting a side of an automobile equipped with the object recognition system according to an embodiment of the present invention and FIG. 7(b) is a schematic diagram depicting the front of the automobile. FIG. 8 is a schematic diagram of the object recognition system.

As illustrated in FIG. 7(a) and 7(b), the object recognition system 1 in the present embodiments includes an imaging device 10a (first imaging unit) and an imaging device 10b (second imaging unit). The imaging device 10a and the imaging device 10b are installed so as to be able to image the scene ahead in the direction in which the automobile travels. As illustrated in FIG. 8, the object recognition system 1 includes a main body 2 and a pair of cylindrical imaging device 10a and imaging device 10b provided on the main body 2.

Overall Hardware Configuration

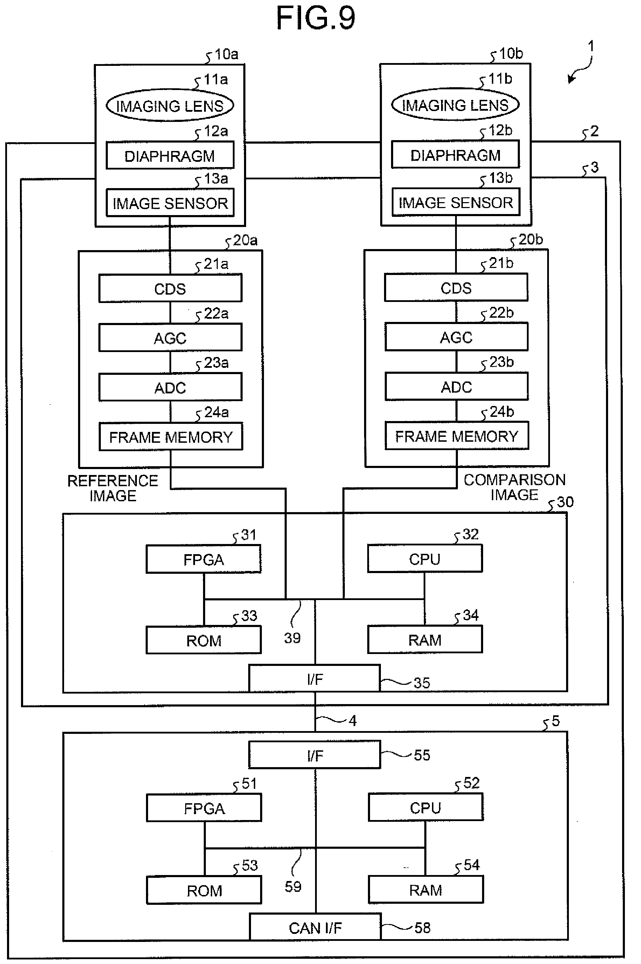

Referring now to FIG. 9, an overall hardware configuration of the object recognition system 1 will be described. FIG. 9 is a hardware configuration diagram of the object recognition system as a whole.

As illustrated in FIG. 9, the object recognition system 1 includes a disparity value deriving device 3 and an object recognition device 5 in the main body 2.

The disparity value deriving device 3 derives a disparity value Δ indicating disparity for an object E from a plurality of images obtained by imaging the object E and outputs a high density disparity image indicating the disparity value Δ in each pixel. The object recognition device 5 performs processing such as measuring the distance from the imaging devices 10a, 10b to the object E, based on the high density disparity image output from the disparity value deriving device 3.

Here, a hardware configuration of the disparity value deriving device 3 will be described first. As illustrated in FIG. 9, the disparity value deriving device 3 includes the imaging device 10a, the imaging device 10b, a signal conversion device 20a, a signal conversion device 20b, and an image processing device 30.

The imaging device 10a generates an analog signal representing an image by imaging the scene ahead and includes an imaging lens 11a, a diaphragm 12a, and an image sensor 13a.

The imaging lens 11a is an optical element for diffracting light passing through the imaging lens 11a to form an image of an object. The diaphragm 12a cuts off part of light passing through the imaging lens 11a to adjust the quantity of light input to the image sensor 13a described later. The image sensor 13a is a semiconductor device that converts light input from the imaging lens 11a and the diaphragm 12a into an electrical analog image signal and is implemented, for example, by a charge coupled device (CCD) or a complementary metal oxide semiconductor (CMOS). The imaging device 10b has the same configuration as the imaging device 10a, and a description of the imaging device 10b is omitted. The imaging lens 11a and the imaging lens 11b are installed such that their respective lens surfaces are on the same plane.

The signal conversion device 20a converts an analog signal representing the captured image into image data in digital format, and includes a correlated double sampling (CDS) 21a, an auto gain control (AGC) 22a, an analog digital converter (ADC) 23a, and a frame memory 24a.

The CDS 21a removes noise by correlated double sampling from the analog image signal converted by the image sensor 13a. The AGC 22a performs gain control of controlling the intensity of the analog image signal having noise removed by the CDS 21a. The ADC 23a converts the analog image signal gain-controlled by the AGC 22a into image data in digital format. The frame memory 24a stores the image data converted by the ADC 23a.

Similarly, the signal conversion device 20b obtains image data from the analog image signal converted by the imaging device 10b and includes a CDS 21b, an AGC 22b, an ADC 23b, and a frame memory 24b.

The CDS 21b, the AGC 22b, the ADC 23b, and the frame memory 24b have the same configuration as the CDS 21a, the AGC 22a, the ADC 23a, and the frame memory 24a, respectively, and a description thereof is omitted.

The image processing device 30 is a device for processing image data converted by the signal conversion device 20a and the signal conversion device 20b. The image processing device 30 includes a field programmable gate array (FPGA) 31, a central processing unit (CPU) 32, a read only memory (ROM) 33, a random access memory (RAM) 34, an interface (I/F) 35, and a bus line 39 such as an address bus and a data bus for electrically connecting the components 31 to 35 as illustrated in FIG. 9.

The FPGA 31 is an integrated circuit and performs the process of calculating a disparity value $\Delta$ in the image represented by image data in accordance with an instruction from the CPU 32. The CPU 32 controls each function in the disparity value deriving device 3. The ROM 33 stores an image processing program for the CPU 32 to execute to control each function in the disparity value deriving device 3. The RAM 34 is used as a work area for the CPU 32. The I/F 35 is an interface for communicating with the I/F 55 of the object recognition device 5 described later through the bus line 4 such as an address bus and a data bus.

A hardware configuration of the object recognition device 5 will now be described. As illustrated in FIG. 9, the object recognition device 5 includes an FPGA 51, a CPU 52, a ROM 53, a RAM 54, an I/F 55, a controller area network (CAN) I/F 58, and a bus line 59 such as an address bus and a data bus for electrically connecting the components 51 to 55, 58 as illustrated in FIG. 9.

The FPGA 51, the CPU 52, the ROM 53, the RAM 54, the I/F 55, and the bus line 59 have the same configuration as the FPGA 31, the CPU 32, the ROM 33, the RAM 34, the I/F 35, and the bus line 39, respectively, in the image processing device 30 and a description thereof is omitted. The I/F 55 is an interface for communicating with the I/F 35 in the image processing device 30 through the bus line 4. The ROM 53 stores an object recognition program for the CPU 52 to execute to control each function in the object recognition device 5. The CAN I/F 58 is an interface for communicating with, for example, an external controller and can be connected to, for example, a controller area network (CAN) of the automobile.

In such a configuration, when a high density disparity image is transmitted from the I/F 35 of the image processing device 30 to the object recognition device 5 through the bus line 4, the FPGA 51 calculates the distance Z from the imaging devices 10a, 10b to an object E according to an instruction from the CPU 52 in the object recognition device 5.

The FPGA 31 may calculate the distance Z under an instruction from the CPU 32 of the image processing device 30, rather than the FPGA 51 calculating the distance Z under an instruction from the CPU 52 in the object recognition device 5.

The programs described above may be recorded in an installable or executable file format on a computer-readable storage medium to be distributed. Examples of the storage medium include a compact disc read only memory (CD-ROM) and a secure digital (SD) memory card.

Block Configuration of Disparity Value Deriving Device and Operation of Each Block

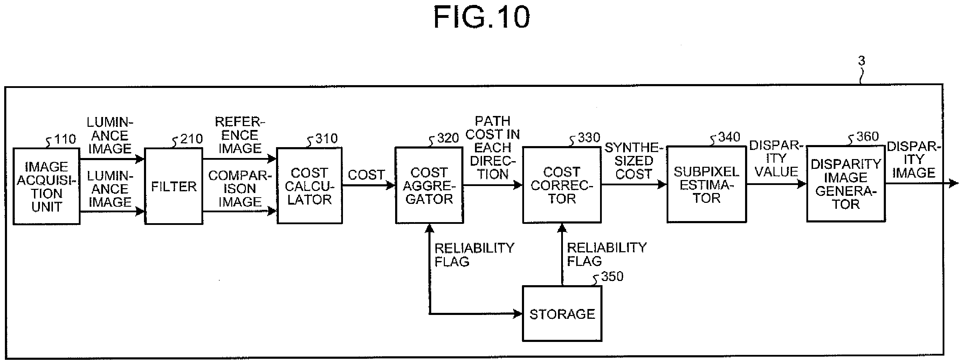

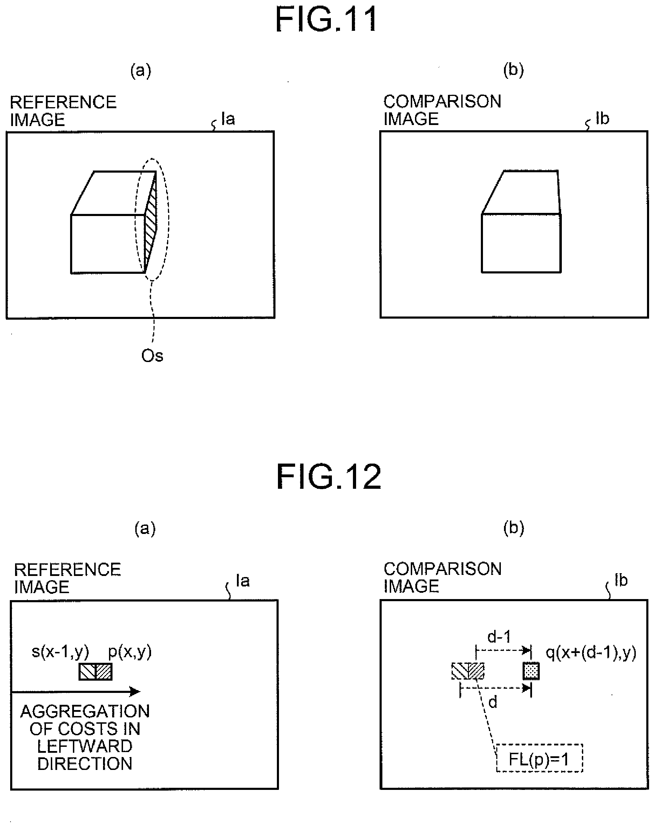

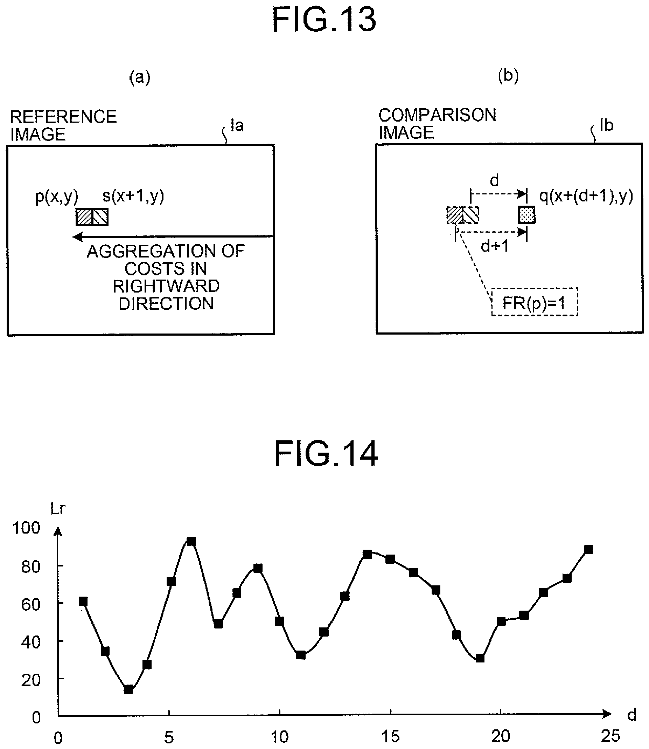

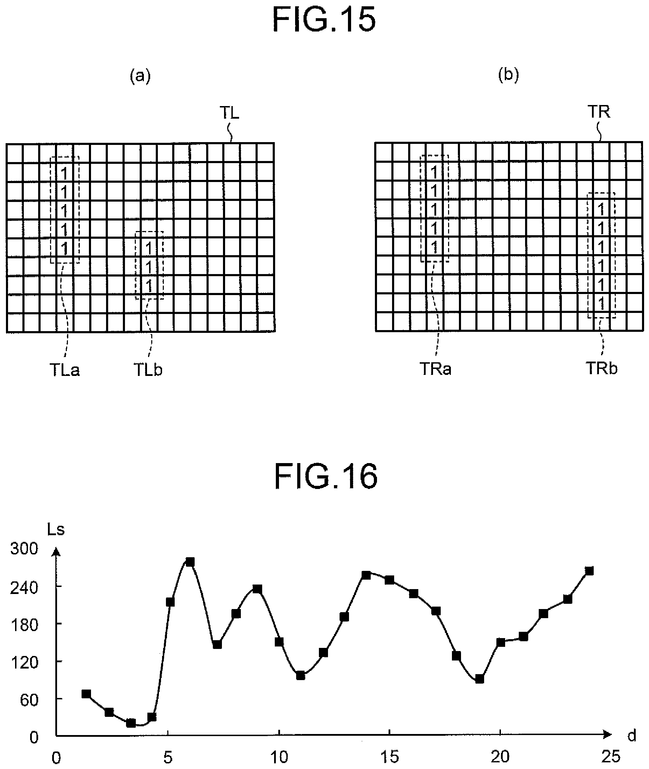

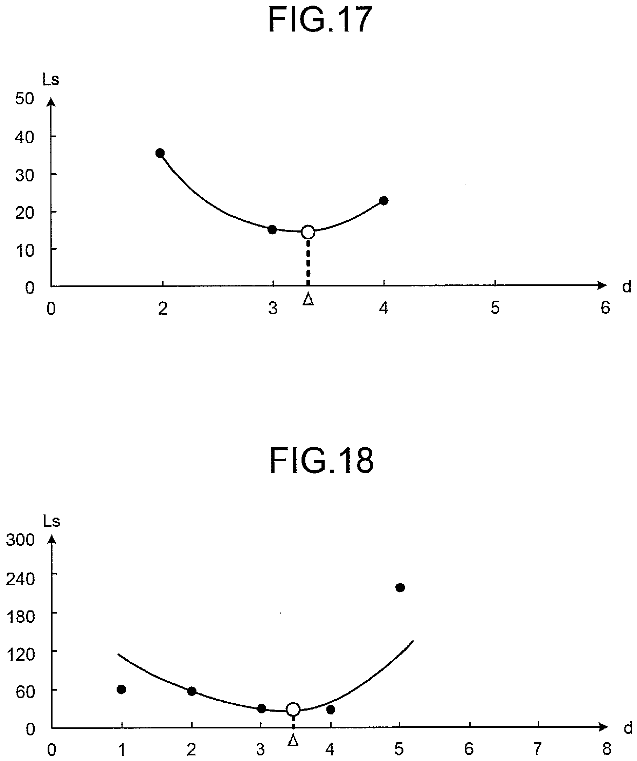

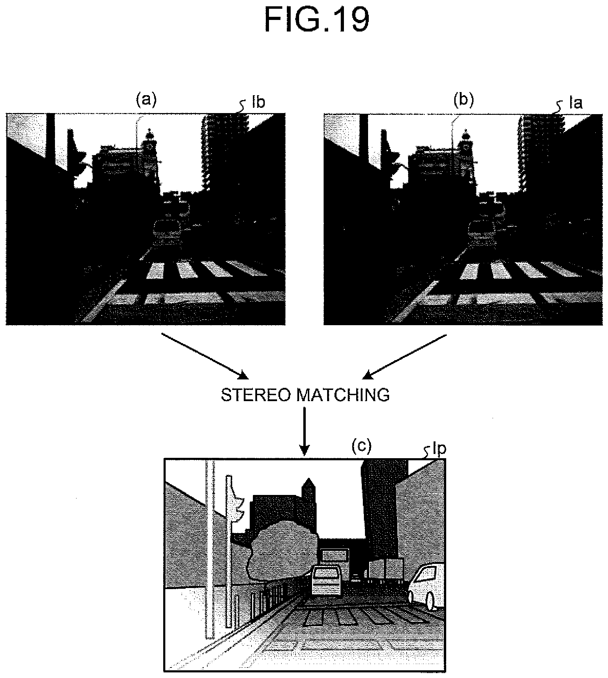

FIG. 10 is a diagram illustrating an example of the block configuration of the disparity value deriving device in the present embodiment. FIG. 11 illustrates occurrence of occlusion in a reference image and a comparison image. FIG. 12 illustrates setting of reliability in a case where costs are aggregated in the leftward direction. FIG. 13 illustrates setting of reliability in a case where costs are aggregated in the rightward direction. FIG. 14 is a graph illustrating the relation between shift amounts and path costs in the r direction in the present embodiment. FIG. 15 illustrates an example of the configuration of a leftward-direction reliability table and a rightward-direction reliability table. FIG. 16 is a graph illustrating the relation between shift amounts and synthesized costs in the present embodiment. FIG. 17 is a diagram illustrating subpixel estimation by parabola fitting. FIG. 18 is a diagram illustrating subpixel estimation by the least squares method. FIG. 19 illustrates a high density disparity image using subpixel estimation. Referring to FIG. 10 to FIG. 19, a bock configuration of the principal part of the disparity value deriving device 3 and the operation of each block will be described. The imaging device 10a illustrated in FIG. 8 above is referred to as the "right" camera and the imaging device 10b illustrated therein is referred to as the "left" camera, for convenience of explanation.

As illustrated in FIG. 10, the disparity value deriving device 3 includes an image acquisition unit 110, a filter 210, a cost calculator 310, a cost aggregator 320 which may be referred to as an aggregating unit, or an information setting unit, a cost corrector 330 which may be referred to as a synthesizer, a subpixel estimator 340, a storage 350, and a disparity image generator 360.

The image acquisition unit 110 is a processing unit that images an object ahead with the two, left and right cameras and generates analog image signals to obtain two luminance images that are images based on the respective image signals. The image acquisition unit 110 is implemented by the imaging device 10a and the imaging device 10b illustrated in FIG. 9.

The filter 210 removes noise from the image signals of the two luminance images obtained by the image acquisition unit 110, converts the image signals into digital image data, and outputs the converted digital image data. Here, the image data of one of the two luminance images (hereinafter simply referred to as "luminance images") output by the filter 210 is set as the image data of the reference image Ia (hereinafter simply referred to as "reference image Ia") captured by the right camera (imaging device 10a) of the image acquisition unit 110, and the image data of the other luminance image is set as the image data of the comparison image Ib (hereinafter simply referred to as "comparison image Ib") captured by the left camera (imaging device 10b). That is, the filter 210 outputs the reference image Ia and the comparison image Ib, based on the two luminance images output from the image acquisition unit 110. The filter 210 is implemented by the signal converters 20a, 20b illustrated in FIG. 9.

The cost calculator 310 calculates the cost $C(p,d)$ of each candidate pixel $q(x+d,y)$, based on the luminance value of a reference pixel $p(x,y)$ (first reference region) in the reference image Ia and each of the luminance values of the candidate pixels $q(x+d,y)$ as candidates for the corresponding pixel that are specified by shifting positions by shift amounts d from the pixel corresponding to the position of the reference pixel $p(x,y)$, on the Epipolar line in the comparison image Ib based on the reference pixel $p(x,y)$. The cost calculator 310 is implemented by the FPGA 31 illustrated in FIG. 9. The cost C calculated by the cost calculator 310 is, for example, the sum of absolute differences (SAD) or the sum of squared differences (SSD). The graph in FIG. 4 above is an example of the graph illustrating the relation between the shift amounts d and the costs C calculated by the cost calculator 310. In the graph illustrated in FIG. 4, approximations of the minimum value of the cost C are given when the shift amount d = 5, 12, 19. It is therefore difficult to obtain the minimum value of the costs C to obtain the corresponding pixel in the comparison image Ib corresponding to the reference pixel in the reference image Ia. Particularly when an image includes a portion with weak texture, it is thus difficult to obtain the minimum value of the costs C.

The cost aggregator 320 calculates the path cost $Lr(p,d)$ in a predetermined direction of r from a candidate pixel $q(x+d,y)$, by aggregating cost C in the comparison image Ib for the reference pixel (second reference region) adjacent in the direction of r to a reference pixel $p(x,y)$ in the reference image Ia, with the cost $C(p,d)$ of the candidate pixel $q(x+d,y)$ calculated by the cost calculator 310. The cost aggregator 320 calculates the path cost $Lr(p,d)$ in a predetermined direction of r according to Equation (3) above. The cost aggregator 320 calculates the path costs Lr in eight directions as predetermined directions of r, namely, $Lr_0$, $Lr_{45}$, $Lr_{90}$, $Lr_{135}$, $Lr_{180}$, $Lr_{225}$, $Lr_{270}$, and $Lr_{315}$, as illustrated in FIG. 5. The cost aggregator 320 is implemented by the FPGA 31 illustrated in FIG. 9.

In order to cope with an occlusion phenomenon in the reference image Ia and the comparison image Ib, the cost aggregator 320 evaluates the reliability of occlusion for the path costs Lr obtained by aggregating costs C in the leftward and rightward directions. Here, of the leftward and rightward directions, the leftward direction (a first direction or a second direction) refers to the direction parallel to the Epipolar line EL in FIG. 3 and extending from the left to the right in FIG. 3. The rightward direction (a second direction or a first direction) refers to the direction parallel to the Epipolar line EL in FIG. 3 and extending from the right to the left in FIG. 3. The occlusion phenomenon refers to a phenomenon, for example, as illustrated in FIG. 11, in which there exists an image region that appears in one of the reference image Ia ((a) in FIG. 11) and the comparison image Ib ((b) in FIG. 11), different in imaging direction, but does not appear in the other. The reference image Ia and the comparison image Ib in FIG. 11 are images obtained by imaging an object shaped like a rectangular parallelepiped. An occlusion region Os that is a side surface of the object appears in the reference image Ia whereas it does not appear in the comparison image Ib. In such a reference image Ia or comparison image Ib, it is impossible to derive a disparity value for the occlusion region that appears in one of the images but does not appear in the other. That is, it is impossible to obtain the distance to the occlusion region of the object. It is therefore necessary to prevent a matching error for the occlusion region in the stereo matching process.

In order to evaluate the reliability of the occlusion as described above, specifically, the cost aggregator 320 sets a leftward-direction reliability flag FL (reliability information) and a rightward-direction reliability flag FR (reliability information), from the path cost $Lr_0$ in the leftward direction and the path cost $Lr_{180}$ in the rightward direction, respectively, of the path costs Lr. In the following description, the path cost $Lr_0$ in the leftward direction is denoted as the path cost Lr_L and the path cost $Lr_{180}$ in the rightward direction is denoted as the path cost Lr_R. That is, the path cost in the leftward direction for the pixel shifted by a shift amount d in the comparison image Ib for a reference pixel $p(x,y)$ in the reference image Ia is denoted as the path cost Lr_L(p,d). The path cost in the rightward direction for the pixel shifted by a shift amount d in the comparison image Ib for a reference pixel $p(x,y)$ in the reference image Ia is denoted as the path cost Lr_R(p,d). The cost aggregator 320 sets the leftward-direction reliability flag FL(p) (in the present embodiment, "1" or "0") for each reference pixel $p(x,y)$ of the reference image Ia, based on the path cost Lr_L, according to (Equation 5) below.

$$FL(p) = \begin{cases} \min_{0 \leq n < D} D(\min(Lr\_L(p,n))) == \min_{0 \leq n < D} D(\min(Lr\_L(s,n))) - 1 : 1 \\ \min_{0 \leq n < D} D(\min(Lr\_L(p,n))) \neq \min_{0 \leq n < D} D(\min(Lr\_L(s,n))) - 1 : 0 \end{cases} \quad (5)$$

In Equation (5), s denotes a pixel adjacent in the leftward direction to a reference pixel p(x,y) in the reference image Ia, as illustrated in (a) in FIG. 12, and p - r = s(x-1,y). Here, r is a unit vector (1,0) in the leftward direction, minD() is a function that returns a disparity value defined by the cost in () (here, the path cost), and min(Lr_L(p,n)) is the minimum value of the path costs Lr_L of pixels at positions shifted by shift amounts d in units of pixels in a predetermined shift range (0 ≤ n <D) in the comparison image Ib, for the reference pixel p in the reference image Ia. That is, the left side of Equation (5) above represents a disparity value defined by the minimum value of the path costs Lr_L in the comparison image Ib for the reference pixel p in the reference image Ia. The disparity value in this case is a disparity value defined based on the path cost Lr (here, the path cost Lr_L) and is denoted as a disparity value △_r (second disparity value) in order to differentiate it from a disparity value △ defined based on a synthesized cost Ls described later. Here, the graph illustrating an example of the relation between shift amounts d in units of pixels and the path costs Lr is illustrated in FIG. 14. In the example in FIG. 14, the path cost Lr has the minimum value at the shift amount d = 3, and therefore, the shift amount d = 3 is a disparity value △_r.

With the disparity value △_r represented by the left side of Equation (5) above, the corresponding pixel (second corresponding region) in the comparison image Ib corresponding to the reference pixel p based on the path cost Lr_L is denoted as q. The cost aggregator 320 sets the leftward-direction reliability flag FL for the reference pixel p to "1" if the pixel (third corresponding region) in the comparison image Ib corresponding to the pixel s agrees with the corresponding pixel q, as illustrated in (b) in FIG. 12, with the disparity value △_r for the pixel s adjacent in the leftward direction to the reference pixel p, as represented by the right side of Equation (5) above, that is, if the top expression in Equation (5) is satisfied. It is basically impossible that the corresponding pixels in the comparison image Ib for two pixels in the reference image Ia agree in this way, and the reference pixel p in the reference image Ia is highly likely to be included in an occlusion region. The cost aggregator 320 then sets the leftward-direction reliability flag FL to "1" for the reference pixel p and stores the possibility that it is included in an occlusion region.

On the other hand, the cost aggregator 320 sets the leftward-direction reliability flag FL for the reference pixel p to "0" if the pixel in the comparison image Ib corresponding to the pixel s does not agree with the corresponding pixel q, with the disparity value △_r for the pixel s adjacent in the leftward direction to the reference pixel p, as represented by the right side of Equation (5) above, that is, if the bottom expression in Equation (5) is satisfied.

As described above, the cost aggregator 320 sets the leftward-direction reliability flag FL for each pixel in the reference image Ia and stores a leftward-direction reliability table TL into the storage 350, in which the leftward-direction reliability flag FL is associated with each pixel in the reference image Ia in the form of a table, as illustrated in (a) in FIG. 15. In the leftward-direction reliability table TL in (a), "1" is set in flag-set portions TLa and TLb, by way of example.

The cost aggregator 320 further sets the rightward-direction reliability flag FR(p) (in the present embodiment, "1" or "0") for each reference pixel p(x,y) in the reference image Ia, based on the path cost Lr_R, according to Equation (6) below.

$$FR(p) = \begin{cases} \min_{0 \leq n < D} D(\min(Lr\_R(p,n))) == \min_{0 \leq n < D} D(\min(Lr\_R(s,n))) + 1 : 1 \\ \min_{0 \leq n < D} D(\min(Lr\_R(p,n))) \neq \min_{0 \leq n < D} D(\min(Lr\_R(s,n))) + 1 : 0 \end{cases}$$

$$(6)$$

In Equation (6), s is a pixel adjacent in the rightward direction to a reference pixel p(x,y) in the reference image Ia, as illustrated in (a) in FIG. 13, and p - r = s(x+1,y). Here, r is a unit vector (-1,0) in the rightward direction, and min(Lr_R(p,n)) is the minimum value of the path costs Lr_R of pixels at positions shifted by shift amounts d in units of pixels in a predetermined shift range (0 ≤ n < D) in the comparison image Ib, for the reference pixel p in the reference image Ia. That is, the left side of Equation (6) above represents a disparity value defined by the minimum value of the path costs Lr_R in the comparison image Ib for the reference pixel p in the reference image Ia. The disparity value in this case is denoted as a disparity value △_r (second disparity value) in order to differentiate it from a disparity value △ defined based on a synthesized cost Ls described later, in the same manner as in the path cost Lr_L described above.

With the disparity value △_r represented by the left side of Equation (6) above, the corresponding pixel (second corresponding region) in the comparison image Ib corresponding to the reference pixel p based on the path cost Lr_R is denoted as q. The cost aggregator 320 sets the rightward-direction reliability flag FR for the reference pixel p to "1" if the pixel (third corresponding pixel) in the comparison image Ib corresponding to the pixel s agrees with the corresponding pixel q, as illustrated in (b) in FIG. 13, with the disparity value $\Delta\_r$ for the pixel s adjacent in the rightward direction to the reference pixel p, as represented by the right side of Equation (6) above, that is, if the top expression in Equation (6) is satisfied. It is basically impossible that the corresponding pixels in the comparison image Ib for two pixels in the reference image Ia agree in this way, and the reference pixel p in the reference image Ia is highly likely to be included in an occlusion region. The cost aggregator 320 then sets the rightward-direction reliability flag FR to "1" for the reference pixel p and stores the possibility that it is included in an occlusion region.

On the other hand, the cost aggregator 320 sets the rightward-direction reliability flag FR for the reference pixel p to "0" if the pixel in the comparison image Ib corresponding to the pixel s does not agree with the corresponding pixel q, with the disparity value $\Delta\_r$ for the pixel s adjacent in the rightward direction to the reference pixel p, as represented by the right side of Equation (6) above, that is, if the bottom expression in Equation (6) is satisfied.

As described above, the cost aggregator 320 sets the rightward-direction reliability flag FR for each pixel in the reference image Ia and stores a rightward-direction reliability table TR into the storage 350, in which the rightward-direction reliability flag FR is associated with each pixel in the reference image Ia in the form of a table, as illustrated in (b) in FIG. 15. In the rightward-direction reliability table TR in (b), "1" is set in flag-set portions TRa and TRb, by way of example.

The leftward-direction reliability flag FL and the rightward-direction reliability flag FR are each set in the form of a flag with "0" or "1" as described above. The embodiments, however, are not limited thereto. Information in any form can be employed as long as it can represent the possibility that a pixel is included in an occlusion region. Although the leftward-direction reliability table TL is in the form of a table in which the leftward-direction reliability flag FL is associated with each pixel in the reference image Ia, the embodiments are not limited thereto. Any form can be employed as long as the leftward-direction reliability flag FL is stored in association with each pixel in the reference image Ia. This is applicable to the rightward-direction reliability table TR.

The cost aggregator 320 evaluates the reliability of occlusion with the path costs Lr (Lr_L, Lr_R) obtained by aggregating costs C in the leftward and rightward directions, that is, sets the leftward-direction reliability flag FL and the rightward-direction reliability flag FR. Embodiments, however, are not limited thereto. For example, based on the path costs $Lr_{45}$ and $Lr_{225}$, the path costs $Lr_{315}$ and $Lr_{135}$, or other path costs, the cost aggregator 320 may set the reliability flags for directions corresponding to these path costs.

The cost aggregator 320 may not necessarily set a reliability flag for each direction, based on the path costs Lr in two directions (for example, the leftward and rightward directions) as described above. That is, the cost aggregator 320 may set reliability flags, based on the path costs Lr in three directions. In this case, the cost corrector 330 described later may determine whether the disparity for a pixel in the reference image Ia is invalid disparity, based on the obtained reliability flags.

The storage 350 stores the leftward-direction reliability table TL including the leftward-direction reliability flag FL set by the cost aggregator 320 and the rightward-direction reliability table TR including the rightward-direction reliability flag FR set by the cost aggregator 320, as described above. The storage 350 is implemented by the RAM 34 illustrated in FIG. 9. The storage 350 may be implemented by an external storage device such as an HDD (Hard Disk Drive) not illustrated in FIG. 9.

The cost corrector 330 calculates the synthesized cost Ls(p,d) of a candidate pixel q(x+d,y), by aggregating costs C of pixels in the comparison image Ib for the reference pixels in the neighborhood of a reference pixel p(x,y) in the reference image Ia, with the cost C(p,d) of the candidate pixel q(x+d,y) calculated by the cost calculator 310. The cost corrector 330 is implemented by the FPGA 31 illustrated in FIG. 9. In order to calculate the synthesized cost Ls(p,d), first, the cost corrector 330 calculates the sum of the path costs Lr(p,d) in six directions excluding the leftward and rightward directions, of the path costs Lr(p,d) in eight directions calculated by the cost aggregator 320. The cost corrector 330 then refers to the leftward-direction reliability table TL and the rightward-direction reliability table TR stored in the storage 350 and reads the leftward-direction reliability flag FL and the rightward-direction reliability flag FR for each pixel in the reference image Ia.

If the leftward-direction reliability flag FL = 0 and the rightward-direction reliability flag FR = 0 for a reference pixel p in the reference image Ia, the cost corrector 330 determines that the reference pixel p is not included in an occlusion region. In the example in FIG. 15, this condition is met in a region of pixels that are in the reference image Ia corresponding to the portion excluding the flag-set portions TLa and TLb in the leftward-direction reliability table TL and that are in the reference image Ia corresponding to the portion excluding the flag-set portions TRa and TRb in the rightward-direction reliability table TR. The cost corrector 330 then adds the path cost Lr_L(p,d) and the path cost Lr_R(p,d) calculated by the cost aggregator 320 to the sum of the path costs Lr(p,d) in the six directions and sets the value obtained by the addition as a synthesized cost Ls(p,d).

If the leftward-direction reliability flag FL = 0 and the rightward-direction reliability flag FR = 1 for a reference pixel p in the reference image Ia, the cost corrector 330 adds only the path cost Lr_L(p,d) calculated by the cost aggregator 320 to the sum of the path costs Lr(p,d) in the six directions and sets the value obtained by the addition as a synthesized cost Ls(p,d). In the example in FIG. 15, this condition is met in a region of pixels in the reference image Ia corresponding to the flag-set portion TRb set to "1" in the rightward-direction reliability table TR.

If the leftward-direction reliability flag FL = 1 and the rightward-direction reliability flag FR = 0 for a reference pixel p in the reference image Ia, the cost corrector 330 adds only the path cost Lr_R(p,d) calculated by the cost aggregator 320 to the sum of the path costs Lr(p,d) in the six directions and sets the value obtained by the addition as a synthesized cost Ls(p,d). In the example in FIG. 15, this condition is met in a region of pixels in the reference image Ia corresponding to the flag-set portion TLb set to "1" in the leftward-direction reliability table TL.

If the leftward-direction reliability flag FL = 1 and the rightward-direction reliability flag FR = 1 for a reference pixel p in the reference image Ia, the cost corrector 330 determines that the reference pixel p is included in an occlusion region. In the example in FIG. 15, this condition is met in a region of pixels in the reference image Ia corresponding to the flag-set portion TLa in the leftward-direction reliability table TL (identical with the pixels in the reference image Ia corresponding to the flag-set portion TRa in the rightward-direction reliability table TR). The cost corrector 330 then sets the synthesized cost Ls(p,d) = 0 and treats the disparity for the reference pixel p as invalid disparity.

As described above, the synthesized cost Ls is calculated by the cost corrector 330. Here, FIG. 16 illustrates the graph illustrating an example of the relation between the shift amount d for each pixel and the synthesized cost Ls calculated by the cost corrector 330 if either the leftward-direction reliability flag FL ≠ 1 or the rightward-direction reliability flag FR ≠ 1. In the example in FIG. 16, the synthesized cost Ls has the minimum value when the shift amount d = 3.

If the leftward-direction reliability flag FL = 1 and the rightward-direction reliability flag FR = 1, the cost corrector 330 determines that the corresponding reference pixel p in the reference image Ia is included in an occlusion region, sets the synthesized cost Ls for the reference pixel p to "0", and determines that the disparity for the reference pixel p is invalid disparity. The disparity for a pixel included in an occlusion region is thus treated as invalid disparity, that is, a valid disparity value is not obtained for the pixel, so that a matching error can be prevented. In order to treat disparity as invalid disparity, the subpixel estimator 340 described later may set an impossible numerical value as a disparity value. For example, if the number of pixels in the horizontal direction of the reference image Ia is 640, for example, "999" may be set as a disparity value to indicate invalid disparity.

As described above, if the leftward-direction reliability flag FL = 0 and the rightward-direction reliability flag FR = 1, the cost corrector 330 adds only the path cost Lr_L(p,d) to the sum of the path costs Lr(p,d) in the six directions thereby to calculate a synthesized cost Ls(p,d). If the leftward-direction reliability flag FL = 1 and the rightward-direction reliability flag FR = 0, the cost corrector 330 adds only the path cost Lr_R(p,d) to the sum of the path costs Lr(p,d) in the six directions thereby to calculate a synthesized cost Ls(p,d). The embodiments, however, are not limited thereto. If one of the leftward-direction reliability flag FL and the rightward-direction reliability flag FR is "1", the cost corrector 330 may determine that the corresponding reference pixel p is included in an occlusion region, set the synthesized cost Ls(p,d) = 0, and treat the disparity for the reference pixel p as invalid disparity.

The subpixel estimator 340 executes subpixel estimation, based on the synthesized costs Ls, calculated by the cost corrector 330, at the shift amount d corresponding to the minimum value (first extreme) of the synthesized costs Ls of pixels in the comparison image Ib for the reference pixel in the reference image Ia and at the adjacent shift amounts d. The subpixel estimator 340 is implemented by the FPGA 31 illustrated in FIG. 9. As described above, the graph of the synthesized costs Ls illustrated in FIG. 16 is the graph of the synthesized costs Ls with respect to shift amounts d in units of pixels. It follows that the minimum value of the synthesized costs Ls in the graph in FIG. 16 is the synthesized cost Ls at the shift amount d = 3 in units of pixels. That is, in the graph of the synthesized costs Ls with respect to the shift amounts d in units of pixels as illustrated in FIG. 16, only a value in units of pixels can be derived as a disparity value Δ. Here, subpixel estimation refers to estimating and deriving a disparity value Δ (the first disparity value) in a unit smaller than a pixel (hereinafter referred to as units of subpixels), rather than a value in units of pixels.

Referring first to FIG. 17, a case in which the subpixel estimator 340 executes subpixel estimation by parabola fitting will be described. The subpixel estimator 340 obtains the value of the shift amount d that corresponds to the smallest synthesized cost Ls in the graph (FIG. 16) of the synthesized costs Ls calculated by the cost corrector 330. In the example in FIG. 16, the shift amount d = 3 corresponds to the smallest synthesized cost Ls. Next, the subpixel estimator 340 obtains the shift amounts d adjacent to the shift amount d = 3. Specifically, the shift amount d = 2, 4. Next, the subpixel estimator 340 obtains a quadratic curve convex downward that passes through three points at which the shift amount d = 2, 3, 5, as illustrated in FIG. 17, in the graph of the shift amounts d and the synthesized costs Ls in FIG. 16. The subpixel estimator 340 then estimates that the shift amount d in units of subpixels corresponding to the local minimum value (second extreme) of the quadratic curve is the disparity value Δ.

Referring now to FIG. 18, a case where the subpixel estimator 340 executes subpixel estimation by the least-squares method will be described. The subpixel estimator 340 obtains the value of the shift amount d at which the synthesized cost Ls is the smallest in the graph (FIG. 16) of the synthesized costs Ls calculated by the cost corrector 330. In the example in FIG. 16, the shift amount d = 3 corresponds to the smallest synthesized cost Ls. Next, the subpixel estimator 340 obtains four shift amounts d in the vicinity of the shift amount d = 3. Specifically, the shift amount d = 1, 2, 4, 5. Next, the subpixel estimator 340 obtains a quadratic curve convex downward that passes through the vicinity of the five points at which the shift amount d = 1 to 5 by the least squares method, as illustrated in FIG. 18, in the graph of the shift amounts d and the synthesized costs Ls in FIG. 16. The subpixel estimator 340 then estimates that the shift amount d in units of subpixels corresponding to the local minimum value (third extreme) of the quadratic curve is the disparity value Δ.

The subpixel estimator 340 estimates and derives the disparity value Δ by the subpixel estimation based on parabola fitting as illustrated in FIG. 17 or the subpixel estimation based on the least squares method as illustrated in FIG. 18. Since the disparity value Δ can be thus derived in units of subpixels, which are units smaller than pixel, accurate and high density disparity values Δ can be derived.

If the synthesized cost Ls calculated by the cost corrector 330 is "0", the subpixel estimator 340 determines that the disparity for the reference pixel p in connection with the synthesized cost Ls is invalid disparity. In this case, the subpixel estimator 340 may set an impossible numerical value as the disparity value of the reference pixel p determined to have invalid disparity.

The subpixel estimation is not limited to estimation based on parabola fitting and estimation based on the least squares method but may be based on other methods. For example, the subpixel estimator 340 may execute subpixel estimation using the three points illustrated in FIG. 17, by equiangular linear fitting for estimating the disparity value Δ by obtaining equiangular lines passing through the three points, rather than a quadratic curve.

In the subpixel estimation based on the least squares method, a quadratic curve is obtained using five points on the graph in FIG. 16. However, embodiments are not limited thereto, and a quadratic curve may be obtained using a different number of points.

Embodiments are not limited to calculation of the disparity value Δ (the first disparity value) in units of subpixels through subpixel estimation by the subpixel estimator 340. The disparity value Δ in units of pixels may be calculated without executing the subpixel estimation. In this case, the subpixel estimator 340 outputs, as a disparity value Δ, the shift amount d corresponding to the minimum value of the synthesized costs Ls of pixels in the comparison image Ib for the reference pixel in the reference image Ia that are calculated by the cost corrector 330.

The disparity image generator 360 generates a disparity image Ip (high density disparity image), which is an image representing the luminance value of each pixel in the reference image Ia by the disparity value Δ corresponding to that pixel, based on the disparity value Δ in units of subpixels derived by the subpixel estimator 340. The disparity image generator 360 is implemented by the FPGA 31 illustrated in FIG. 9. In FIG. 19, section (a) is a schematic diagram illustrating an example of the comparison image Ib, section (b) is a schematic diagram illustrating an example of the reference image Ia, and section (c) is a schematic diagram illustrating a conceptual diagram of the disparity image Ip generated by the disparity image generator 360. The disparity image generator 360 displays the pixel determined to have invalid disparity, for example, in "black" ("0" in 256 levels of gray) or "white" ("255" in 256 levels of gray) in the disparity image Ip to indicate that the pixel is a pixel with invalid disparity.

The cost calculator 310, the cost aggregator 320, the cost corrector 330, the subpixel estimator 340, and the disparity image generator 360 are implemented by the FPGA 31, that is, hardware circuitry, although embodiments are not limited thereto. That is, at least one of the cost calculator 310, the cost aggregator 320, the cost corrector 330, the subpixel estimator 340, and the disparity image generator 360 may be implemented by the CPU 32 executing a software program. The cost calculator 310, the cost aggregator 320, the cost corrector 330, the subpixel estimator 340, and the disparity image generator 360 are functions conceptually configured as blocks, and the embodiments are not limited to such configurations.

Image Processing by Disparity Value Deriving Device

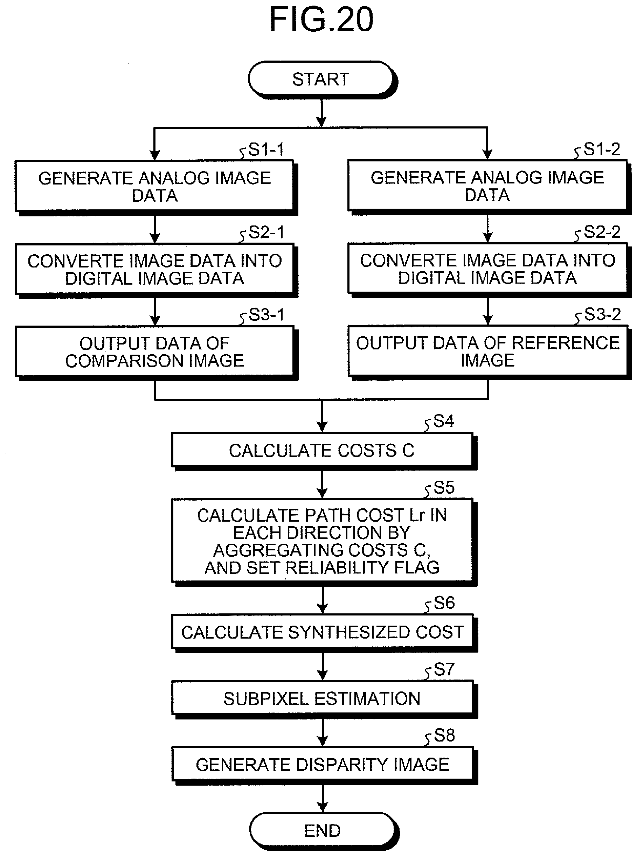

FIG. 20 is a diagram illustrating an example of the operational procedure of a stereo matching process in the disparity value deriving device according to the present embodiment. Referring to FIG. 20, the operational procedure of image processing based on the stereo matching process (the SGM method) in the disparity value deriving device 3 will be described.

Step S1-1

The image acquisition unit 110 of the disparity value deriving device 3 generates an analog image signal by imaging an object ahead with the left camera (imaging device 10b) and obtains a luminance image that is an image based on the image signal. The process then proceeds to step S2-1.

Step S1-2

The image acquisition unit 110 of the disparity value deriving device 3 generates an analog image signal by imaging an object ahead with the right camera (imaging device 10a) and obtains a luminance image that is an image based on the image signal. The process then proceeds to step S2-2.

Step S2-1

The filter 210 of the disparity value deriving device 3 removes noise from the analog image signal obtained by imaging with the imaging device 10b and converts the image signal into digital image data. The process then proceeds to step S3-1.

Step S2-2

The filter 210 of the disparity value deriving device 3 removes noise from the analog image signal obtained by imaging with the imaging device 10a and converts the image signal into digital image data. The process then proceeds to step S3-2.

Step S3-1

The filter 210 outputs an image based on the digital image data converted at step S2-1 as a comparison image Ib in the stereo matching process. The process then proceeds to step S4.

Step S3-2

The filter 210 outputs an image based on the digital image data obtained by the conversion at step S2-2 as a reference image Ia in the stereo matching process. The process then proceeds to step S4.

Step S4

The cost calculator 310 of the disparity value deriving device 3 calculates the cost C(p,d) of each candidate pixel q(x+d,y), based on the luminance value of the reference pixel p(x,y) in the reference image Ia and the luminance value of each of the candidate pixels q(x+d,y) for the corresponding pixel that are specified by shifting positions by shift amounts d from the pixel corresponding to the position of the reference pixel p(x,y), on the Epipolar line in the comparison image Ib based on the reference pixel p(x,y). The process then proceeds to step S5.

Step S5

The cost aggregator 320 of the disparity value deriving device 3 calculates the path cost Lr(p,d) in a predetermined direction of r with respect to a candidate pixel q(x+d,y), by aggregating costs C in the comparison image Ib for the reference pixels adjacent in the directions of r to a reference pixel p(x,y) in the reference image Ia, with the cost C(p,d) of the candidate pixel q(x+d,y) calculated by the cost calculator 310. The cost aggregator 320 calculates the path costs Lr in eight directions as predetermined directions of r, namely, $Lr_0$, $Lr_{45}$, $Lr_{90}$, $Lr_{135}$, $Lr_{180}$, $Lr_{225}$, $Lr_{270}$, and $Lr_{315}$, as illustrated in FIG. 5.

In order to evaluate the reliability of occlusion, the cost aggregator 320 sets the leftward-direction reliability flag FL and the rightward-direction reliability flag FR, from the path cost $Lr_0$ (Lr_L) in the leftward direction and the path cost $Lr_{180}$ (Lr_R) in the rightward direction, respectively, of the path costs Lr.

The cost aggregator 320 sets the leftward-direction reliability flag FL(p) for each reference pixel p(x,y) in the reference image Ia, based on the path cost Lr_L, according to Equation (5) above. The cost aggregator 320 sets the leftward-direction reliability flag FL to "1" for the reference pixel p if the disparity value Δ_r for the pixel s adjacent in the leftward direction to the reference pixel p, as represented by the right side of Equation (5) above, indicates that the pixel in the comparison image Ib corresponding to the pixel s agrees with the corresponding pixel q, that is, if the top expression in Equation (5) is satisfied. On the other hand, the cost aggregator 320 sets the leftward-direction reliability flag FL to "0" for the reference pixel p if the disparity value Δ_r for the pixel s adjacent in the leftward direction to the reference pixel p, as represented by the right side of Equation (5) above, indicates that the pixel in the comparison image Ib corresponding to the pixel s does not agree with the corresponding pixel q, that is, if the bottom expression in Equation (5) is satisfied. As described above, the cost aggregator 320 sets the leftward-direction reliability flag FL for each pixel in the reference image Ia and stores a leftward-direction reliability table TL into the storage 350, in which the leftward-direction reliability flag FL is related with each pixel in the reference image Ia in the form of a table, as illustrated in (a) in FIG. 15.

The cost aggregator 320 sets the rightward-direction reliability flag FR(p) for each reference pixel p(x,y) in the reference image Ia, based on the path cost Lr_R, according to Equation (6) above. The cost aggregator 320 sets the rightward-direction reliability flag FR to "1" for the reference pixel p if the pixel in the comparison image Ib corresponding to the pixel s agrees with the corresponding pixel q, with the disparity value Δ_r for the pixel s adjacent in the rightward direction to the reference pixel p, as represented by the left side of Equation (6) above, that is, if the top expression in Equation (6) is satisfied. On the other hand, the cost aggregator 320 sets the rightward-direction reliability flag FR to "0" for the reference pixel p if the pixel in the comparison image Ib corresponding to the pixel s does not agree with the corresponding pixel q, with the disparity value Δ_r for the pixel s adjacent in the rightward direction to the reference pixel p, as represented by the right side of Equation (6) above, that is, if the bottom expression in Equation (6) is satisfied. As described above, the cost aggregator 320 sets the rightward-direction reliability flag FR for each pixel in the reference image Ia and stores a rightward-direction reliability table TR into the storage 350, in which the rightward-direction reliability flag FR is related with each pixel in the reference image Ia in the form of a table, as illustrated in (b) in FIG. 15. The process then proceeds to step S6.

Step S6

The cost corrector 330 of the disparity value deriving device 3 calculates the synthesized cost Ls(p,d) of a candidate pixel q(x+d,y), by aggregating costs C of pixels in the comparison image Ib for the reference pixels in the neighborhood of the reference pixel p(x,y) in the reference image Ia, with the cost C(p,d) of the candidate pixel q(x+d,y) calculated by the cost calculator 310. In order to calculate the synthesized cost Ls(p,d), first, the cost corrector 330 calculates the sum of the path costs Lr(p,d) in six directions excluding the leftward and rightward directions, of the path costs Lr(p,d) in eight directions calculated by the cost aggregator 320. The cost corrector 330 then refers to the leftward-direction reliability table TL and the rightward-direction reliability table TR stored in the storage 350 and reads the leftward-direction reliability flag FL and the rightward-direction reliability flag FR for each pixel in the reference image Ia.

If the leftward-direction reliability flag FL = 0 and the rightward-direction reliability flag FR = 0 for a reference pixel p in the reference image Ia, the cost corrector 330 determines that the reference pixel p is not included in an occlusion region. The cost corrector 330 then adds the path cost Lr_L(p,d) and the path cost Lr_R(p,d) calculated by the cost aggregator 320 to the sum of the path costs Lr(p,d) in the six directions and sets the value obtained by the addition as a synthesized cost Ls(p,d).

If the leftward-direction reliability flag FL = 0 and the rightward-direction reliability flag FR = 1 for a reference pixel p in the reference image Ia, the cost corrector 330 adds only the path cost Lr_L(p,d) calculated by the cost aggregator 320 to the sum of the path costs Lr(p,d) in the six directions and sets the value obtained by the addition as a synthesized cost Ls(p,d).

If the leftward-direction reliability flag FL = 1 and the rightward-direction reliability flag FR = 0 for a reference pixel p in the reference image Ia, the cost corrector 330 adds only the path cost Lr_R(p,d) calculated by the cost aggregator 320 to the sum of the path costs Lr(p,d) in the six directions and sets the value obtained by the addition as a synthesized cost Ls(p,d).

If the leftward-direction reliability flag FL = 1 and the rightward-direction reliability flag FR = 1 for a reference pixel p in the reference image Ia, the cost corrector 330 determines that the reference pixel p is included in an occlusion region. The cost corrector 330 then sets the synthesized cost Ls(p,d) = 0 and treats the disparity for the reference pixel p as invalid disparity. The process then proceeds to step S7.

Step S7

The subpixel estimator 340 of the disparity value deriving device 3 executes subpixel estimation, based on the synthesized costs Ls, calculated by the cost corrector 330, at the shift amount d corresponding to the minimum value of the synthesized costs Ls of pixels in the comparison image Ib for the reference pixel in the reference image Ia and at the adjacent shift amounts d. The subpixel estimator 340 estimates that the shift amount d in units of subpixels corresponding to the minimal value of the fitted curve obtained by subpixel estimation (the quadratic curve convex downward in FIG. 17 and FIG. 18) is the disparity value Δ.

If the synthesized cost Ls calculated by the cost corrector 330 is "0", the subpixel estimator 340 determines that the disparity for the reference pixel p associated with the synthesized cost Ls is invalid disparity. In this case, the subpixel estimator 340 may set an impossible numerical value as the disparity value of the reference pixel p determined to have invalid disparity, as described above. The process then proceeds to step S8.

Step S8

The disparity image generator 360 generates the disparity image Ip (high density disparity image) that is an image representing the luminance value of each pixel in the reference image Ia by the disparity value Δ corresponding to that pixel, based on the disparity values Δ in units of subpixels derived by the subpixel estimator 340.

The image data of the disparity image Ip is then output through the I/F 35 in FIG. 9, and the distance from the imaging devices 10a, 10b to the object is calculated by the object recognition device 5.

Example of Equipment Control System Mounted on Vehicle

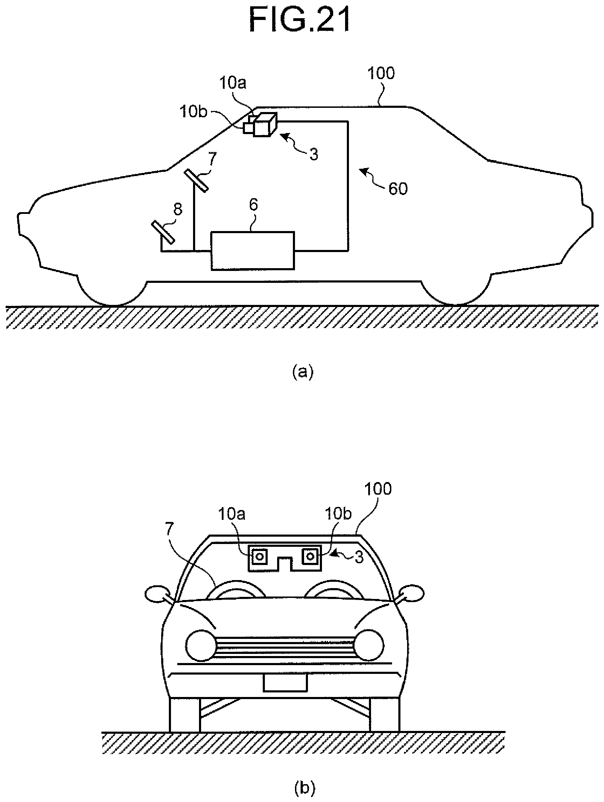

FIG. 21 illustrates an example of an equipment control system according to the present embodiment mounted on a vehicle. Referring to FIG. 21, an example of the equipment control system 60 mounted on a vehicle 100 will be described below.

In the configuration illustrated in FIG. 21, the vehicle 100 configured as an automobile includes the equipment control system 60. The equipment control system 60 includes the disparity value deriving device 3 installed in the inside of the vehicle that is a cabin space, a control device 6, a steering wheel 7, and a brake pedal 8.

The disparity value deriving device 3 has an imaging function of imaging the direction in which the vehicle 100 travels, and is installed, for example, in the vicinity of the rear view mirror on the inside of the front window of the vehicle 100. The disparity value deriving device 3 includes a main body 2, and an imaging device 10a and an imaging device 10b fixed to the main body 2. The imaging devices 10a, 10b are fixed to the main body 2 such that an object in the direction in which the vehicle 100 travels can be imaged.

The control device 6 is a device connected to the disparity value deriving device 3 in place of the object recognition device 5 in the object recognition system 1 described above and executes a variety of vehicle control with distance information from the disparity value deriving device 3 to the object that is obtained based on image data of the disparity image received from the disparity value deriving device 3. The control device 6 executes, as an example of the vehicle control, steering control of controlling a steering system (control target) including the steering wheel 7 to avoid an obstacle, or brake control of controlling the brake pedal 8 (control target) to decelerate and stop the vehicle 100, based on image data of the disparity image received from the disparity value deriving device 3.

The safety of driving the vehicle 100 can be improved by executing vehicle control such as steering control or brake control as in the equipment control system 60 including the disparity value deriving device 3 and the control device 6.

As described above, the disparity value deriving device 3 captures an image of objects in front of the vehicle 100. However, embodiments are not limited thereto. Specifically, the disparity value deriving device 3 may be installed so as to capture an image of objects in the rear or at the side of the vehicle 100. In this case, the disparity value deriving device 3 can detect the position of, for example, a vehicle behind that follows the vehicle 100 or other vehicles running side by side with the vehicle 100. The control device 6 can detect the danger when the vehicle 100 changes lanes or merges into a lane, and execute the above vehicle control. The control device 6 can also execute the above vehicle control when determining that there is a danger of collision while the vehicle 100 is being backed, for example, in a parking space, based on the disparity image of an obstacle behind the vehicle 100 that is detected by the disparity value deriving device 3.

Main Advantageous Effects of Present Embodiment

In the disparity value deriving device 3 according to the present embodiment as described above, if the leftward-direction reliability flag FL = 1 and the rightward-direction reliability flag FR = 1, the cost corrector 330 determines that the corresponding reference pixel p in the reference image Ia is included in an occlusion region and determines that the disparity for the reference pixel p is invalid disparity. The disparity for the pixel included in an occlusion region is thus treated as invalid disparity, that is a valid disparity value is not obtained for the pixel, so that a matching error can be prevented.

In the disparity value deriving device 3, the subpixel estimator 340 can derive a disparity value $\Delta$ in units of subpixels, that is, units smaller than pixels, so that accurate and dense disparity values $\Delta$ can be derived, resulting in a more precise disparity image.

When the cost C serving as the degree of matching is an evaluation value representing the degree of similarity, the shift amount d at which the synthesized cost Ls is the largest in units of subpixels is the disparity value $\Delta$.

In the foregoing embodiment the object recognition device 5 calculates the distance Z based on a disparity image (disparity value). However, embodiments are not limited thereto, and the CPU 32 of the image processor 30 of the disparity value deriving device 3 may calculate the distance Z.

According to the embodiments described above, a matching error in a stereo matching process can be prevented.

**Claims**

1. A disparity value deriving device comprising:

   a calculator (310) configured to calculate respective costs C(p, d) of a plurality of candidate regions serving as candidates for a first corresponding region in a comparison image corresponding to a first reference region in a reference image, based on a luminance value of the first reference region (p (x, y)) and luminance values of the candidate regions, the reference image being an image of an object captured by a first imaging unit, the comparison image being an image of the object captured by a second imaging unit, the candidate regions being specified by shifting positions by predetermined shift amounts from a region in the comparison image that is on an epipolar line based on the first reference region and corresponds to a position of the first reference region; **characterized in that** the disparity value deriving device further comprising:

an information setting unit configured to set, for each of any particular directions of the predetermined directions, reliability information that indicates whether there is a possibility that the first reference region (p (x, y)) is included in an occlusion region, based on the path costs in the particular directions;

a synthesizer (330) configured to calculate synthesized costs as a sum of calculated costs of the respective candidate regions (q (x, y)), based on the path costs excluding the path cost in the particular direction in which the reliability information is set to indicate that there is a possibility that the first reference region (p (x, y)) is included in an occlusion region wherein the synthesized costs $Ls(p,d) = \sum Lr(p,d)$ are calculated, where

$$Lr(p,d) = C(p,d) + \min\{(Lr(p-r,d), Lr(p-r,d-1)+P1, Lr(p-r,d+1) + P1, Lrmin(p-r) + P2\},$$

wherein Lr(p,d) is a path cost, r denotes a direction vector in an aggregation direction and has two components of the x direction and the y direction, the term min {} is a function for obtaining the minimum value, Lrmin(p-r) denotes the minimum value of Lr(p-r,d) when the shift amount d is changed in the coordinates in which the first reference region (p(x,y)) is shifted by one pixel in the aggregation direction, and P1 and P2 are fixed parameters set in advance such that disparity values of adjacent reference pixels on the path are likely to be continuous;

an aggregating unit (320) configured to aggregate each of costs in the comparison image for second reference regions adjacent in a plurality of predetermined directions to the first reference region (p (x, y)), with the cost of a corresponding candidate region (q (x, y)) to calculate path costs of the respective candidate regions (q (x, y)) in the predetermined directions, wherein the leftward-direction reliability flag

$$FL(p) = \begin{cases} \min_{0 \leq n < D} D(\min(Lr\_L(p,n))) == \min_{0 \leq n < D} D(\min(Lr\_L(s,n))) - 1 : 1 \\ \min_{0 \leq n < D} D(\min(Lr\_L(p,n))) \neq \min_{0 \leq n < D} D(\min(Lr\_L(s,n))) - 1 : 0 \end{cases}$$

is set for each reference pixel p(x,y) of the reference image, wherein s denotes a pixel adjacent in the leftward direction to the reference pixel p(x,y), p-r=s(x-1,y), the direction of r is defined by a unit vector (1, 0) in the leftward direction, minD( ) is a function that returns a disparity value defined by the path cost and min(Lr_L(p,n)) is the minimum value of the path costs Lr_L of pixels at positions shifted by shift amounts d in units of pixels in a predetermined shift range ($0 \leq n \leq D$) in the comparison image of the reference pixel p(x,y) in the reference image, and

wherein the rightward-direction reliability flag

$$FR(p) = \begin{cases} \min_{0 \leq n < D} D(\min(Lr\_R(p,n))) == \min_{0 \leq n < D} D(\min(Lr\_R(s,n))) + 1 : 1 \\ \min_{0 \leq n < D} D(\min(Lr\_R(p,n))) \neq \min_{0 \leq n < D} D(\min(Lr\_R(s,n))) + 1 : 0 \end{cases}$$

is set for each reference pixel p(x,y) in the reference image, wherein s denotes a pixel in the rightward direction to the reference pixel p(x,y) in the reference image, p-r=s(x+1,y), the direction of r is defined by a unit vector (-1, 0) in the rightward direction, and min (Lr_R(p,n)) is the minimum value of the path costs Lr_R of pixels at positions shifted by shift amounts d in units of pixels in a predetermined shift range ($0 \leq n \leq D$) in the comparison image for the reference pixel p(x,y) in the reference image; and

a deriving unit configured to derive a first disparity value for the object, based on the shift amount corresponding to a first extreme of the synthesized costs of the candidate regions (q (x, y)) in the comparison image, the information setting unit is configured to set, by setting the leftward-direction reliability flag to FL(p) = 1 and the rightward-direction reliability flag to FR(p) = 1, the reliability information of a particular direction to indicate that there is a possibility that the first reference region (p (x, y)) is included in the occlusion region when a second corresponding region in the comparison image corresponding to the first reference region (p (x, y)) that is specified by a second disparity value defined based on the path cost in the particular direction agrees with a third corresponding region in the comparison image corresponding to the second reference region in the particular direction.

2. The disparity value deriving device according to claim 1 , wherein
the synthesizer (330) is configured to determine that the first reference region (p (x, y)) is included in the occlusion region when the reliability information for any one of the particular directions is set by the information setting unit to indicate that there is a possibility that the first reference region (p (x, y)) is included in the occlusion region, and the deriving unit is configured to invalidate the first disparity value of the first reference region (p (x, y))determined to be included in the occlusion region by the synthesizer (330).

3. The disparity value deriving device according to claim 1 , wherein
the synthesizer (330) is configured to determine the first reference region (p (x, y))is included in the occlusion region when the reliability information for all of the particular directions are set by the information setting unit to indicate that there is a possibility that the first reference region (p (x, y)) is included in the occlusion region, and the deriving unit is configured to invalidate the first disparity value of the first reference region (p (x, y)) determined to be included in the occlusion region by the synthesizer (330).

4. The disparity value deriving device according to any one of claims 1 to 3, wherein the deriving unit is configured to derive the first disparity value by subpixel estimation, based on adjacent shift amounts including the shift amount corresponding to the first extreme.

5. The disparity value deriving device according to claim 4, wherein the deriving unit is configured to derive, as the first disparity value, a shift amount in units of subpixels corresponding to a second extreme of a quadratic curve passing through three points on coordinates defined by the shift amount corresponding to the first extreme, two shift amounts adjacent to the shift amount, and the synthesized costs corresponding to the shift amounts.

6. The disparity value deriving device according to claim 4, wherein the deriving unit is configured to derive, as the first disparity value, a shift amount in units of subpixels corresponding to a third extreme of a quadratic curve defined by a least squares method for four or more points on coordinates defined by four or more adjacent shift amounts including the shift amount corresponding to the first extreme and by the synthesized costs corresponding to the shift amounts.

7. An equipment control system comprising:

the disparity value deriving device according to any one of claims 1 to 6; and
a control device (6) configured to control a control target by distance information from the disparity value deriving device to the object that is obtained with the first disparity value derived by the disparity value deriving device.

8. A movable apparatus comprising the equipment control system according to claim 7.

9. A robot comprising the equipment control system according to claim 7.

10. A disparity value deriving method comprising:

calculating respective costs C(p,d) of a plurality of candidate regions (q (x, y)) serving as candidates for a first corresponding region in a comparison image corresponding to a first reference region (p (x, y)) in a reference image, based on a luminance value of the first reference region (p (x, y)) and luminance values of the candidate regions (q (x, y)), the reference image being an image of an object captured by a first imaging unit, the comparison image being an image of the object captured by a second imaging unit, the candidate regions (q (x, y)) being specified by shifting positions by predetermined shift amounts from a region in the comparison image that is on an epipolar line based on the first reference region (p (x, y)) and corresponds to a position of the first reference region (p (x, y));
**characterized in that** the disparity value deriving method further comprising:

setting, for each of any particular directions of the predetermined directions, reliability information that indicates whether there is a possibility that the first reference region (p (x, y)) is included in an occlusion region, based on the path costs in the particular directions;

calculating synthesized costs as a sum of calculated costs of the respective candidate regions (q (x, y)), based on the path costs excluding the path cost in the particular direction in which the reliability information is set to indicate that there is a possibility that the first reference region (p (x, y)) is included in an occlusion region, wherein the synthesized costs $Ls(p,d) = \sum Lr(p,d)$ are calculated, where

$$Lr(p,d) = C(p,d) + \min\{(Lr(p{-}r,d), Lr(p{-}r,d{-}1){+}P1, Lr(p{-}r,d{+}1) + P1, Lrmin(p{-}r) + P2\},$$

wherein Lr(p,d) is a path cost, r denotes a direction vector in the aggregation direction and has two components of the x direction and the y direction, the term min {} is a function for obtaining the minimum value, Lrmin(p-r) denotes the minimum value of Lr(p-r,d) when the shift amount d is changed in the coordinates in which the first reference region (p(x,y)) is shifted by one pixel in the aggregation direction, and P1 and P2 are fixed parameters set in advance such that disparity values of adjacent reference pixels on the path are likely to be continuous;

aggregating each of costs in the comparison image for second reference regions adjacent in a plurality of predetermined directions to the first reference region (p (x, y)), with the cost of a corresponding candidate region (q (x, y)) to calculate path costs of the respective candidate regions in the predetermined directions, wherein the leftward-direction reliability flag

$$FL(p) = \begin{cases} \min_{0 \le n < D} D(\min(Lr\_L(p,n))) == \min_{0 \le n < D} D(\min(Lr\_L(s,n))) - 1 : 1 \\ \min_{0 \le n < D} D(\min(Lr\_L(p,n))) \ne \min_{0 \le n < D} D(\min(Lr\_L(s,n))) - 1 : 0 \end{cases}$$

is set for each reference pixel p(x,y) of the reference image, wherein s denotes a pixel adjacent in the leftward direction to the reference pixel p(x,y), p-r=s(x-1,y), the direction of r is defined by a unit vector (1, 0) in the leftward direction, minD( ) is a function that returns a disparity value defined by the path cost and min(Lr_L(p,n)) is the minimum value of the path costs Lr_L of pixels at positions shifted by shift amounts d in units of pixels in a predetermined shift range ($0 \le n \le D$) in the comparison image of the reference pixel p(x,y) in the reference image, and

wherein the rightward-direction reliability flag

$$FR(p) = \begin{cases} \min_{0 \le n < D} D(\min(Lr\_R(p,n))) == \min_{0 \le n < D} D(\min(Lr\_R(s,n))) + 1 : 1 \\ \min_{0 \le n < D} D(\min(Lr\_R(p,n))) \ne \min_{0 \le n < D} D(\min(Lr\_R(s,n))) + 1 : 0 \end{cases}$$

is set for each reference pixel p(x,y) in the reference image, wherein s denotes a pixel in the rightward direction to the reference pixel p(x,y) in the reference image, p-r=s(x+1,y), the direction of r is defined by a unit vector (-1,0) in the rightward direction, and min (Lr_R(p,n)) is the minimum value of the path costs Lr_R of pixels at positions shifted by shift amounts d in units of pixels in a predetermined shift range ($0 \le n \le D$) in the comparison image for the reference pixel p(x,y) in the reference image; and;

deriving a first disparity value for the object, based on the shift amount corresponding to a first extreme of the synthesized costs of the candidate regions in the comparison image,

setting, by setting the leftward-direction reliability flag to FL(p) = 1 and the rightward-direction reliability flag to FR(p) = 1, the reliability information of a particular direction to indicate that there is a possibility that the first reference region (p (x, y)) is included in the occlusion region when a second corresponding region in the comparison image corresponding to the first reference region (p (x, y)) that is specified by a second disparity value defined based on the path cost in the particular direction agrees with a third corresponding region in the comparison image corresponding to the second reference region in the particular direction.

11. A computer-readable storage medium with an executable program stored thereon and executed by a computer, wherein the program instructs the computer to execute the method according to the preceding claims.

**Patentansprüche**

1. Disparitätswert-Ableitungseinrichtung, die Folgendes umfasst:

einen Rechner (310), der konfiguriert ist, entsprechende Kosten C(p, d) von mehreren Kandidatenbereichen, die als Kandidaten für einen ersten entsprechenden Bereich in einem Vergleichsbild, der einem ersten Bezugsbereich in einem Bezugsbild entspricht, dienen, auf der Grundlage eines Luminanzwertes des ersten Bezugsbereichs (p(x, y)) und von Luminanzwerten der Kandidatenbereiche zu berechnen, wobei das Bezugsbild ein Bild von einem Objekt, das durch eine erste Bilderzeugungseinheit aufgenommen wurde, ist und das Vergleichsbild ein Bild von dem Objekt, das durch eine zweite Bilderzeugungseinheit aufgenommen wurde, ist, wobei die Kandidatenbereiche durch Verschieben von Positionen um vorgegebene Verschiebungsbeträge von einem Bereich im Vergleichsbild, der auf einer Epipolarlinie auf der Grundlage des ersten Bezugsbereichs liegt und einer Position des ersten Bezugsbereichs entspricht, festgelegt sind;
**dadurch gekennzeichnet, dass** die Disparitätswert-Ableitungseinrichtung ferner Folgendes enthält:

eine Datensetzeinheit, die konfiguriert ist, für alle beliebigen bestimmten Richtungen von den vorgegebenen Richtungen Verlässlichkeitsdaten, die anzeigen, ob auf der Grundlage der Pfadkosten in den bestimmten Richtungen eine Möglichkeit besteht, dass der erste Bezugsbereich (p(x, y)) in einem Verdeckungsbereich enthalten ist, zu setzen;
einen Synthetisierer (330), der konfiguriert ist, synthetisierte Kosten als eine Summe von berechneten Kosten der entsprechenden Kandidatenbereiche (q(x, y)) auf der Grundlage der Pfadkosten mit Ausnahme der Pfadkosten in der bestimmten Richtung, in der die Verlässlichkeitsdaten gesetzt sind, um anzuzeigen, dass eine Möglichkeit besteht, dass der erste Bezugsbereich (p(x, y)) in einem Verdeckungsbereich enthalten ist, zu berechnen, wobei die synthetisierten Kosten $Ls(p,d) = \sum Lr(p,d)$ berechnet werden, wobei $Lr(p,d) = C(p,d) + min\{(Lr(p - r,d), Lr(p - r,d - 1) + P1, Lr(p - r,d + 1) + P1, Lrmin(p - r) + P2)\}$ und Lr(p, d) Pfadkosten sind, r einen Richtungsvektor in einer Zusammenfassungsrichtung bezeichnet und zwei Komponenten von der x-Richtung und der y-Richtung besitzt, der Term min{ } eine Funktion ist, um den Minimalwert zu erhalten, Lrmin(p - r) den Minimalwert von Lr(p - r, d) bezeichnet, wenn der Verschiebungsbetrag d in die Koordinaten, in denen der erste Bezugsbereich (p(x, y)) um einen Bildpunkt in der Zusammenfassungsrichtung verschoben ist, geändert wird und P1 und P2 feste Parameter sind, die im Voraus derart eingestellt werden, dass die Disparitätswerte von benachbarten Bezugsbildpunkten auf dem Pfad wahrscheinlich kontinuierlich sind;
eine Zusammenfassungseinheit (320), die konfiguriert ist, sämtliche Kosten im Vergleichsbild für zweite Bezugsbereiche, die in mehreren vorgegebenen Richtungen an den ersten Bezugsbereich (p(x, y)) angrenzen, mit den Kosten von einem entsprechenden Kandidatenbereich (q(x, y)) zusammenzufassen, um Pfadkosten von den entsprechenden Kandidatenbereichen (q(x, y)) in den vorgegebenen Richtungen zu berechnen, wobei der Linksrichtungsverlässlichkeitsmerker

$$FL(p) = \begin{cases} \min D(\min_{0 \le n < D}(Lr\_L(p,n))) == \min D(\min_{0 \le n < D}(Lr\_L(s,n))) - 1 : 1 \\ \min D(\min_{0 \le n < D}(Lr\_L(p,n))) \ne \min D(\min_{0 \le n < D}(Lr\_L(s,n))) - 1 : 0 \end{cases}$$

für jeden Bezugsbildpunkt p(x, y) des Bezugsbildes gesetzt wird, wobei s einen Bildpunkt, der in der Linksrichtung an den Bezugsbildpunkt p(x, y), p-r=s(x-1, y) angrenzt, bezeichnet, die Richtung von r durch einen Einheitsvektor (1, 0) in der Linksrichtung definiert ist, min D( ) eine Funktion ist, die einen Disparitätswert, der durch die Pfadkosten definiert ist, zurückgibt und min (Lr_L(p, n)) der Minimalwert der Pfadkosten Lr_L von Bildpunkten bei Positionen, die um Verschiebungsbeträge d in Einheiten von Bildpunkten in einem vorgegebenen Verschiebungsbereich ($0 \le n \le D$) im Vergleichsbild des Bezugsbildpunktes p(x, y) im Bezugsbild verschoben sind, ist, und
der Rechtsrichtungsverlässlichkeitsmerker

$$FR(p) = \begin{cases} \min D(\min_{0 \le n < D}(Lr\_R(p,n))) == \min D(\min_{0 \le n < D}(Lr\_R(s,n))) + 1 : 1 \\ \min D(\min_{0 \le n < D}(Lr\_R(p,n))) \ne \min D(\min_{0 \le n < D}(Lr\_R(s,n))) + 1 : 0 \end{cases}$$

für jeden Bezugsbildpunkt p(x, y) im Bezugsbild gesetzt wird, wobei s einen Bildpunkt in der Rechtsrichtung zum Bezugsbildpunkt p(x, y) im Bezugsbild, p-r=s(x+1, y), bezeichnet, die Richtung von r durch einen Einheitsvektor (-1,0) in der Rechtsrichtung definiert ist und min (Lr_R(p, n)) der Minimalwert der Pfadkosten Lr_R von Bildpunkten bei Positionen, die um Verschiebungsbeträge d in Einheiten von Bildpunkten in einem vorgegebenen Verschiebungsbereich (0 ≤ n ≤ D) im Vergleichsbild für den Bezugsbildpunkt p(x, y) im Bezugsbild verschoben sind, ist; und

eine Herleitungseinheit, die konfiguriert ist, einen ersten Disparitätswert für das Objekt auf der Grundlage des Verschiebungsbetrags, der einem ersten Extremwert der synthetisierten Kosten der Kandidatenbereiche (q(x, y)) im Vergleichsbild entspricht, herzuleiten, wobei
die Datensetzeinheit konfiguriert ist, durch Setzen des Linksrichtungsverlässlichkeitsmerkers zu FL(p) = 1 und des Rechtsrichtungsverlässlichkeitsmerkers zu FR(p) = 1 die Verlässlichkeitsdaten von einer bestimmten Richtung derart zu setzen, dass sie anzeigen, dass eine Möglichkeit besteht, dass der erste Bezugsbereich (p(x, y)) im Verdeckungsbereich enthalten ist, wenn ein zweiter entsprechender Bereich im Vergleichsbild, der dem ersten Bezugsbereich (p(x, y)), der durch einen zweiten Disparitätswert, der auf der Grundlage der Pfadkosten in der bestimmten Richtung definiert ist, festgelegt ist, entspricht, mit einem dritten entsprechenden Bereich im Vergleichsbild, der dem zweiten Bezugsbereich in der bestimmten Richtung entspricht, übereinstimmt.

2. Disparitätswert-Ableitungseinrichtung nach Anspruch 1, wobei
der Synthetisierer (330) konfiguriert ist, zu bestimmen, dass der erste Bezugsbereich (p(x, y)) im Verdeckungsbereich enthalten ist, wenn die Verlässlichkeitsdaten für jede beliebige der bestimmten Richtungen durch die Datensetzeinheit derart gesetzt werden, dass sie anzeigen, dass eine Möglichkeit besteht, dass der erste Bezugsbereich (p(x, y)) im Verdeckungsbereich enthalten ist, und
die Herleitungseinheit konfiguriert ist, den ersten Disparitätswert des ersten Bezugsbereichs (p(x, y)), der vom Synthetisierer (330) als im Verdeckungsbereich enthalten bestimmt wurde, für ungültig zu erklären.

3. Disparitätswert-Ableitungseinrichtung nach Anspruch 1, wobei
der Synthetisierer (330) konfiguriert ist, zu bestimmen, dass der erste Bezugsbereich (p(x, y)) im Verdeckungsbereich enthalten ist, wenn die Verlässlichkeitsdaten für alle der bestimmten Richtungen durch die Datensetzeinheit derart gesetzt werden, dass sie anzeigen, dass eine Möglichkeit besteht, dass der erste Bezugsbereich (p(x, y)) im Verdeckungsbereich enthalten ist, und
die Herleitungseinheit konfiguriert ist, den ersten Disparitätswert des ersten Bezugsbereichs (p(x, y)), der vom Synthetisierer (330) als im Verdeckungsbereich enthalten bestimmt wurde, für ungültig zu erklären.

4. Disparitätswert-Ableitungseinrichtung nach einem der Ansprüche 1 bis 3, wobei die Herleitungseinheit konfiguriert ist, den ersten Disparitätswert durch Unterbildpunktschätzung auf der Grundlage benachbarter Verschiebungsbeträge, die den Verschiebungsbetrag, der dem ersten Extremwert entspricht, enthalten, herzuleiten.

5. Disparitätswert-Ableitungseinrichtung nach Anspruch 4, wobei die Herleitungseinheit konfiguriert ist, einen Verschiebungsbetrag in Einheiten von Unterbildpunkten, der einem zweiten Extremwert einer quadratischen Kurve, die durch drei Punkte bei Koordinaten, die durch den Verschiebungsbetrag, der dem ersten Extremwert entspricht, zwei Verschiebungsbeträge, die dem Verschiebungsbetrag benachbart sind, und die synthetisierten Kosten, die den Verschiebungsbeträgen entsprechen, definiert sind, verlaufen, als den ersten Disparitätswert herzuleiten.

6. Disparitätswert-Ableitungseinrichtung nach Anspruch 4, wobei die Herleitungseinheit konfiguriert ist, einen Verschiebungsbetrag in Einheiten von Unterbildpunkten, der einem dritten Extremwert einer quadratischen Kurve, die durch ein Verfahren der kleinsten Quadrate für vier oder mehr Punkte bei Koordinaten, die durch vier oder mehr Verschiebungsbeträge, die den Verschiebungsbetrag, der dem ersten Extremwert entspricht, enthalten, und durch die synthetisierten Kosten, die den Verschiebungsbeträgen entsprechen, definiert sind, verlaufen, als den ersten Disparitätswert herzuleiten.

7. Ausrüstungssteuersystem, das Folgendes enthält:

die Disparitätswert-Ableitungseinrichtung nach einem der Ansprüche 1 bis 6 und
eine Steuereinrichtung (6), die konfiguriert ist, ein Steuerziel durch Entfernungsdaten von der Disparitätswert-Ableitungseinrichtung zum Objekt, die mit dem ersten Disparitätswert, der durch die Disparitätswert-Ableitungseinrichtung hergeleitet wird, erhalten werden, zu steuern.

8. Bewegliche Vorrichtung, die das Ausrüstungssteuersystem nach Anspruch 7 enthält.

9. Roboter, der das Ausrüstungssteuersystem nach Anspruch 7 enthält.

10. Disparitätswert-Ableitungsverfahren, das Folgendes umfasst:

Berechnen entsprechender Kosten C(p, d) von mehreren Kandidatenbereichen (q(x, y)), die als Kandidaten für einen ersten entsprechenden Bereich in einem Vergleichsbild, der einem ersten Bezugsbereich (p(x, y)) in einem Bezugsbild entspricht, dienen, auf der Grundlage eines Luminanzwertes des ersten Bezugsbereichs (p(x, y)) und von Luminanzwerten der Kandidatenbereiche (q(x, y)), wobei das Bezugsbild ein Bild von einem Objekt, das durch eine erste Bilderzeugungseinheit aufgenommen wurde, ist und das Vergleichsbild ein Bild von dem Objekt, das durch eine zweite Bilderzeugungseinheit aufgenommen wurde, ist, wobei die Kandidatenbereiche (q(x, y)) durch Verschieben von Positionen um vorgegebene Verschiebungsbeträge von einem Bereich im Vergleichsbild, der auf einer Epipolarlinie auf der Grundlage des ersten Bezugsbereichs (p(x, y)) liegt und einer Position des ersten Bezugsbereichs (p(x, y)) entspricht, festgelegt sind;

**dadurch gekennzeichnet, dass** das Disparitätswert-Ableitungsverfahren ferner Folgendes enthält:

Setzen, für alle beliebigen bestimmten Richtungen von den vorgegebenen Richtungen von Verlässlichkeitsdaten, die anzeigen, ob auf der Grundlage der Pfadkosten in den bestimmten Richtungen eine Möglichkeit besteht, dass der erste Bezugsbereich (p(x, y)) in einem Verdeckungsbereich enthalten ist;

Berechnen synthetisierter Kosten als eine Summe von berechneten Kosten der entsprechenden Kandidatenbereiche (q(x, y)) auf der Grundlage der Pfadkosten mit Ausnahme der Pfadkosten in der bestimmten Richtung, in der die Verlässlichkeitsdaten gesetzt sind, um anzuzeigen, dass eine Möglichkeit besteht, dass der erste Bezugsbereich (p(x, y)) in einem Verdeckungsbereich enthalten ist, wobei die synthetisierten Kosten $Ls(p,d) = \sum Lr(p,d)$ berechnet werden, wobei $Lr(p,d) = C(p,d) + \min\{(Lr(p - r,d), Lr(p - r,d - 1) + P1, Lr(p - r,d + 1) + P1, Lrmin(p - r) + P2)\}$ und $Lr(p,d)$ Pfadkosten sind, r einen Richtungsvektor in der Zusammenfassungsrichtung bezeichnet und zwei Komponenten von der x-Richtung und der y-Richtung besitzt, der Term $\min\{\}$ eine Funktion ist, um den Minimalwert zu erhalten, $Lrmin(p - r)$ den Minimalwert von $Lr(p - r,d)$ bezeichnet, wenn der Verschiebungsbetrag d in die Koordinaten, in denen der erste Bezugsbereich (p(x, y)) um einen Bildpunkt in der Zusammenfassungsrichtung verschoben ist, geändert wird und P1 und P2 feste Parameter sind, die im Voraus derart eingestellt werden, dass die Disparitätswerte von benachbarten Bezugsbildpunkten auf dem Pfad wahrscheinlich kontinuierlich sind;

Zusammenfassen sämtlicher Kosten im Vergleichsbild für zweite Bezugsbereiche, die in mehreren vorgegebenen Richtungen an den ersten Bezugsbereich (p(x, y)) angrenzen, mit den Kosten von einem entsprechenden Kandidatenbereich (q(x, y)), um Pfadkosten von den entsprechenden Kandidatenbereichen in den vorgegebenen Richtungen zu berechnen, wobei der Linksrichtungsverlässlichkeitsmerker

$$FL(p) = \begin{cases} \min D(\min_{0 \leq n < D}(Lr\_L(p, n))) == \min D(\min_{0 \leq n < D}(Lr\_L(s, n))) - 1 : 1 \\ \min D(\min_{0 \leq n < D}(Lr\_L(p, n))) \neq \min D(\min_{0 \leq n < D}(Lr\_L(s, n))) - 1 : 0 \end{cases}$$

für jeden Bezugsbildpunkt p(x, y) des Bezugsbildes gesetzt wird, wobei s einen Bildpunkt, der in der Linksrichtung an den Bezugsbildpunkt p(x, y), p-r=s(x-1, y) angrenzt, bezeichnet, die Richtung von r durch einen Einheitsvektor (1, 0) in der Linksrichtung definiert ist, min D( ) eine Funktion ist, die einen Disparitätswert, der durch die Pfadkosten definiert ist, zurückgibt und min (Lr - L(p, n)) der Minimalwert der Pfadkosten Lr - L von Bildpunkten bei Positionen, die um Verschiebungsbeträge d in Einheiten von Bildpunkten in einem vorgegebenen Verschiebungsbereich ($0 \leq n \leq D$) im Vergleichsbild des Bezugsbildpunktes p(x, y) im Bezugsbild verschoben sind, ist, und

der Rechtsrichtungsverlässlichkeitsmerker

$$FR(p) = \begin{cases} \min D(\min_{0 \leq n < D}(Lr\_R(p, n))) == \min D(\min_{0 \leq n < D}(Lr\_R(s, n))) + 1 : 1 \\ \min D(\min_{0 \leq n < D}(Lr\_R(p, n))) \neq \min D(\min_{0 \leq n < D}(Lr\_R(s, n))) + 1 : 0 \end{cases}$$

für jeden Bezugsbildpunkt p(x, y) im Bezugsbild gesetzt wird, wobei s einen Bildpunkt in der Rechtsrichtung zum Bezugsbildpunkt p(x, y) im Bezugsbild, p-r=s(x+1, y), bezeichnet, die Richtung von r durch einen Einheitsvektor (-1,0) in der Rechtsrichtung definiert ist und min (Lr_R(p, n)) der Minimalwert der Pfadkosten Lr_R von Bildpunkten bei Positionen, die um Verschiebungsbeträge d in Einheiten von Bildpunkten in einem vorgegebenen Verschiebungsbereich (0 ≤ n ≤ D) im Vergleichsbild für den Bezugsbildpunkt p(x, y) im Bezugsbild verschoben sind, ist;

Herleiten eines ersten Disparitätswertes für das Objekt auf der Grundlage des Verschiebungsbetrags, der einem ersten Extremwert der synthetisierten Kosten der Kandidatenbereiche im Vergleichsbild entspricht; und

Setzen, durch Setzen des Linksrichtungsverlässlichkeitsmerkers zu FL(p) = 1 und des Rechtsrichtungsverlässlichkeitsmerkers zu FR(p) = 1 der Verlässlichkeitsdaten von einer bestimmten Richtung derart, dass sie anzeigen, dass eine Möglichkeit besteht, dass der erste Bezugsbereich (p(x, y)) im Verdeckungsbereich enthalten ist, wenn ein zweiter entsprechender Bereich im Vergleichsbild, der dem ersten Bezugsbereich (p(x, y)), der durch einen zweiten Disparitätswert, der auf der Grundlage der Pfadkosten in der bestimmten Richtung definiert ist, festgelegt ist, entspricht, mit einem dritten entsprechenden Bereich im Vergleichsbild, der dem zweiten Bezugsbereich in der bestimmten Richtung entspricht, übereinstimmt.

11. Computerlesbares Speichermedium, in dem ein ausführbares Programm gespeichert ist und das durch einen Computer ausgeführt wird, wobei das Programm den Computer anweist, das Verfahren nach den vorhergehenden Ansprüchen auszuführen.

## Revendications

1. Dispositif de déduction de valeur de disparité comprenant :

une calculatrice (310) conçue pour calculer des coûts respectifs C (p, d) d'une pluralité de régions candidates servant de candidats pour une première région correspondante dans une image de comparaison correspondant à une première région de référence dans une image de référence, en fonction d'une valeur de luminance de la première région de référence (p (x, y)) et de valeurs de luminance des régions candidates, l'image de référence étant une image de l'objet capturé par une première unité d'imagerie, l'image de comparaison étant une image d'un objet capturé par une deuxième unité d'imagerie, les régions candidates étant spécifiées par des positions de décalage de quantités de décalage prédéterminées à partir d'une région dans l'image de comparaison qui est sur une ligne épi-polaire en fonction de la première région de référence et correspond à une position de la première région de référence ;

**caractérisé en ce que** le dispositif de déduction de valeur de disparité comprend en outre :

une unité de paramétrage d'informations conçue pour paramétrer, pour chacune de quelconques directions particulières des directions prédéterminées, d'informations de fiabilité qui indiquent s'il existe une possibilité que la première région de référence (p (x, y)) est comprise dans une région d'occlusion, en fonction des coûts de trajet dans les directions particulières ;

un synthétiseur (330) conçu pour calculer des coûts synthétisés en tant que somme de coûts calculés des régions candidates respectives (q (x, y)), en fonction des coûts de trajet à l'exclusion du coût de trajet dans la direction particulière dans laquelle les informations de fiabilité sont paramétrées pour indiquer qu'il existe une possibilité que la première région de référence (p (x, y)) est comprise dans une région d'occlusion , les coûts synthétisés $Ls\ (p,\ d) = \sum Lr\ (p,\ d)$ étant calculés, où

$Lr\ (p,\ d) = C(p,\ d) + \min\{(Lr\ (p - r,\ d),\ Lr\ (p - r,\ d - 1)+P1,\ Lr\ (p - r,\ d + 1) + P1,\ Lrmin\ (p - r) + P2\}$, $Lr\ (p,\ d)$ représentant un coût de trajet, r désignant un vecteur de direction dans un sens d'agrégation et comportant deux composantes de la direction x et la direction y, le terme min {} représentant une fonction permettant d'obtenir la valeur minimale, $Lrmin\ (p - r)$ désignant la valeur minimale de $Lr\ (p - r,\ d)$ lorsque la quantité de décalage d est modifiée dans les coordonnées selon lesquelles la première région de référence (p (x, y)) est décalée d'un pixel dans le sens d'agrégation et P1 et P2 sont des paramètres fixes définis à l'avance de manière que des valeurs de disparité de pixels de référence adjacents sur le trajet sont susceptibles d'être continues ;

une unité d'agrégation (320) conçue pour agréger chacun des coûts dans l'image de comparaison pour des deuxièmes régions de référence adjacentes dans une pluralité de directions prédéterminées à la première région de référence (p (x, y)), avec le coût d'une région candidate correspondante (q (x, y)) pour calculer des coûts de trajet des régions candidates respectives (q (x, y)) dans les directions prédéterminées, l'indicateur de fiabilité vers la gauche

$$FL(p) = \begin{cases} \min D(\min_{0 \le n < D}(Lr\_L(p,n))) == \min D(\min_{0 \le n < D}(Lr\_L(s,n))) - 1 : 1 \\ \min D(\min_{0 \le n < D}(Lr\_L(p,n))) \ne \min D(\min_{0 \le n < D}(Lr\_L(s,n))) - 1 : 0 \end{cases}$$

étant défini pour chaque pixel de référence p (x,y) de l'image de référence, s désignant un pixel adjacent vers la gauche au pixel de référence p (x, y), p - r = s (x-1, y), le sens de r étant défini par un vecteur d'unité (1, 0) vers la gauche, minD() représentant une fonction qui renvoie une valeur de disparité définie par le coût de trajet et min (Lr_L (p, n)) représentant la valeur minimale des coûts de trajet Lr_L de pixels dans des positions décalées de quantités de décalage d dans des unités de pixels dans une plage de décalage prédéterminé ($0 \le n \le D$) dans l'image de comparaison du pixel de référence p (x, y) dans l'image de référence, et l'indicateur de fiabilité vers la droite

$$FR(p) = \begin{cases} \min D(\min_{0 \le n < D}(Lr\_R(p,n))) == \min D(\min_{0 \le n < D}(Lr\_R(s,n))) + 1 : 1 \\ \min D(\min_{0 \le n < D}(Lr\_R(p,n))) \ne \min D(\min_{0 \le n < D}(Lr\_R(s,n))) + 1 : 0 \end{cases}$$

étant défini pour chaque pixel de référence p (x,y) dans l'image de référence, s désignant un pixel vers la droite du pixel de référence p (x, y) dans l'image de référence, p-r = s (x + 1, y), le sens de r étant défini par un vecteur d'unité (-1,0) vers la droite, et min (Lr_R (p, n)) représentant la valeur minimale des coûts de trajet Lr_L de pixels dans des positions décalées de quantités de décalage d dans des unités de pixels dans une plage de décalage prédéterminé ($0 \le n \le D$) dans l'image de comparaison pour le pixel de référence p (x, y) dans l'image de référence ; et

une unité de déduction conçue pour déduire une première valeur de disparité pour l'objet, en fonction de la quantité de décalage correspondant à un premier extrême des coûts synthétisés des régions candidates (q (x, y)) dans l'image de comparaison,
l'unité de paramétrage d'informations étant conçue pour définir, en paramétrant l'indicateur de fiabilité vers la gauche sur FL (p) = 1 et l'indicateur de fiabilité vers la droite sur FR (p) = 1, les informations de fiabilité d'une direction particulière pour indiquer qu'il existe une possibilité que la première région de référence (p (x, y)) est comprise dans la région d'occlusion lorsqu'une deuxième région correspondante dans l'image de comparaison correspondant à la première région de référence (p (x, y)) qui est spécifiée par une deuxième valeur de disparité définie en fonction du coût de trajet dans la direction particulière est en accord avec une troisième région correspondante dans l'image de comparaison correspondant à la deuxième région de référence dans la direction particulière.

2. Dispositif de déduction de valeur de disparité selon la revendication 1, dans lequel
le synthétiseur (330) est conçu pour déterminer que la première région de référence (p (x, y)) est comprise dans la région d'occlusion lorsque les informations de fiabilité pour une quelconque des directions particulières sont définies par l'unité de paramétrage d'informations pour indiquer qu'il existe une possibilité que la première région de référence (p (x, y)) est comprise dans la région d'occlusion, et
l'unité de déduction est conçue pour invalider la première valeur de disparité de la première région de référence (p (x, y)) déterminée pour être comprise dans la région d'occlusion par le synthétiseur (330).

3. Dispositif de déduction de valeur de disparité selon la revendication 1, dans lequel
le synthétiseur (330) est conçu pour déterminer que la première région de référence (p (x, y)) est comprise dans la région d'occlusion lorsque les informations de fiabilité pour toutes les directions particulières sont définies par l'unité de paramétrage d'informations pour indiquer qu'il existe une possibilité que la première région de référence (p (x, y)) est comprise dans la région d'occlusion, et
l'unité de déduction est conçue pour invalider la première valeur de disparité de la première région de référence (p (x, y)) déterminée comme étant comprise dans la région d'occlusion par le synthétiseur (330).

4. Dispositif de déduction de valeur de disparité selon l'une quelconque des revendications 1 à 3, dans lequel l'unité de déduction est conçue pour déduire la première valeur de disparité par une estimation de sous-pixel, en fonction de quantités de décalage adjacent comprenant la quantité de décalage correspondant au premier extrême.

5. Dispositif de déduction de valeur de disparité selon la revendication 4, dans lequel l'unité de déduction est conçue pour déduire, en tant que première valeur de disparité, une quantité de décalage dans des unités de sous-pixels correspondant à un deuxième extrême d'une courbe quadratique passant par trois points sur des coordonnées définies par la quantité de décalage correspondant au premier extrême, deux quantités de décalage adjacent à la quantité de décalage, et les coûts synthétisés correspondant aux quantités de décalage.

6. Dispositif de déduction de valeur de disparité selon la revendication 4, dans lequel l'unité de déduction est conçue pour déduire, en tant que première valeur de disparité, une quantité de décalage dans des unités de sous-pixels correspondant à un troisième extrême d'une courbe quadratique définie par une méthode des moindres carrés pour au moins quatre points sur des coordonnées définies par au moins quatre quantités de décalage adjacent comprenant la quantité de décalage correspondant au premier extrême et par les coûts synthétisés correspondant aux quantités de décalage.

7. Système de commande d'équipement comprenant :

le dispositif de déduction de valeur de disparité selon l'une quelconque des revendications 1 à 6 , et un dispositif de commande (6) conçu pour commander une cible de commande par des informations de distance à partir du dispositif de déduction de valeur de disparité vers l'objet qui est obtenu avec la première valeur de disparité déduite par le dispositif de déduction de valeur de disparité.

8. Appareil mobile comprenant le système de commande d'équipement selon la revendication 7.

9. Robot comprenant le système de commande d'équipement selon la revendication 7.

10. Procédé de déduction de valeur de disparité comprenant :

le calcul de coûts respectifs C (p, d) d'une pluralité de régions candidates (q (x, y)) servant de candidats pour une première région correspondante dans une image de comparaison correspondant à une première région de référence (p (x, y)) dans une image de référence, en fonction d'une valeur de luminance de la première région de référence (p (x, y)) et de valeurs de luminance des régions candidates (p (x, y)), l'image de référence étant une image d'un objet capturé par une première unité d'imagerie, l'image de comparaison étant une image de l'objet capturé par une deuxième unité d'imagerie, les régions candidates (q (x, y)) étant spécifiées par des positions de commutation de quantités de décalage prédéterminées à partir d'une région dans l'image de comparaison qui est sur une ligne épi-polaire en fonction de la première région de référence (p (x, y)) et correspond à une position de la première région de référence (p (x, y)) ;
**caractérisé en ce que** le procédé de déduction de valeur de disparité comprend en outre :

la définition, pour chacune de quelconques directions particulières des directions prédéterminées, d'informations de fiabilité qui indiquent s'il existe une possibilité que la première région de référence (p (x, y)) est comprise dans une région d'occlusion, en fonction des coûts de trajet dans les directions particulières ;
le calcul de coûts synthétisés en tant que somme de coûts calculés des régions candidates respectives (q (x, y)), en fonction des coûts de trajet à l'exclusion du coût de trajet dans la direction particulière dans laquelle les informations de fiabilité sont définies pour indiquer qu'il existe une possibilité que la première région de référence (p (x, y)) est comprise dans une région d'occlusion, les coûts synthétisés $Ls\ (p, d) = \sum Lr\ (p, d)$ étant calculés, où
$Lr\ (p, d) = C(p, d) + \min\{Lr\ (p - r, d), Lr\ (p - r, d - 1) + P1, Lr\ (p - r, d + 1) + P1, Lr\min\ (p - r) + P2\}$, $Lr\ (p, d)$ représentant un coût de trajet, r désignant un vecteur de direction dans un sens d'agrégation et comportant deux composantes de la direction x et la direction y, le terme min {} représentant une fonction permettant d'obtenir la valeur minimale, $Lr\min\ (p - r)$ désignant la valeur minimale de $Lr\ (p - r, d)$ lorsque la quantité de décalage d est modifiée dans les coordonnées selon lesquelles la première région de référence (p (x, y)) est décalée d'un pixel dans le sens d'agrégation et P1 et P2 sont des paramètres fixes définis à l'avance de manière que des valeurs de disparité de pixels de référence adjacents sur le trajet sont susceptibles d'être continues ;

l'agrégation de chacun des coûts dans l'image de comparaison pour des deuxièmes régions de référence adjacentes dans une pluralité de directions prédéterminées à la première région de référence (p (x, y)), avec le coût d'une région candidate correspondante (q (x, y)) pour calculer des coûts de trajet des régions candidates respectives dans les directions prédéterminées, l'indicateur de fiabilité vers la gauche

$$FL(p) = \begin{cases} \min D(\min_{0 \le n < D}(Lr\_L(p,n))) == \min D(\min_{0 \le n < D}(Lr\_L(s,n))) - 1 : 1 \\ \min D(\min_{0 \le n < D}(Lr\_L(p,n))) \ne \min D(\min_{0 \le n < D}(Lr\_L(s,n))) - 1 : 0 \end{cases}$$

étant défini pour chaque pixel de référence $p(x,y)$ de l'image de référence, s désignant un pixel adjacent vers la gauche au pixel de référence $p(x, y)$, $p - r = s(x - 1, y)$, le sens de r étant défini par un vecteur d'unité $(1, 0)$ vers la gauche, $minD()$ représentant une fonction qui renvoie une valeur de disparité définie par le coût de trajet et $\min(Lr\_L(p, n))$ représentant la valeur minimale des coûts de trajet $Lr\_L$ de pixels dans des positions décalées de quantités de décalage d dans des unités de pixels dans une plage de décalage prédéterminée $(0 \le n \le D)$ dans l'image de comparaison du pixel de référence $p(x, y)$ dans l'image de référence, et l'indicateur de fiabilité vers la droite

$$FR(p) = \begin{cases} \min D(\min_{0 \le n < D}(Lr\_R(p,n))) == \min D(\min_{0 \le n < D}(Lr\_R(s,n))) + 1 : 1 \\ \min D(\min_{0 \le n < D}(Lr\_R(p,n))) \ne \min D(\min_{0 \le n < D}(Lr\_R(s,n))) + 1 : 0 \end{cases}$$

étant défini pour chaque pixel de référence $p(x,y)$ dans l'image de référence, s désignant un pixel vers la droite du pixel de référence $p(x, y)$ dans l'image de référence, $p-r = s(x + 1, y)$, le sens de r étant défini par un vecteur d'unité $(-1,0)$ vers la droite, et $\min(Lr\_R(p, n))$ représentant la valeur minimale des coûts de trajet $Lr\_L$ de pixels dans des positions décalées de quantités de décalage d dans des unités de pixels dans une plage de décalage prédéterminée $(0 \le n \le D)$ dans l'image de comparaison pour le pixel de référence $p(x, y)$ dans l'image de référence ; et ;

la déduction d'une première valeur de disparité pour l'objet, en fonction de la quantité de décalage correspondant à un premier extrême des coûts synthétisés des régions candidates dans l'image de comparaison, la définition, par le paramétrage de l'indicateur de fiabilité vers la gauche sur FL (p) = 1 et de l'indicateur de fiabilité vers la droite sur FR (p) = 1, des informations de fiabilité d'une direction particulière pour indiquer qu'il existe une possibilité que la première région de référence (p (x, y)) est comprise dans la région d'occlusion lorsqu'une deuxième région correspondante dans l'image de comparaison correspondant à la première région de référence (p (x, y)) qui est spécifiée par une deuxième valeur de disparité définie en fonction du coût de trajet dans la direction particulière est en accord avec une troisième région correspondante dans l'image de comparaison correspondant à la deuxième région de référence dans la direction particulière.

11. Support de stockage lisible par ordinateur avec un programme exécutable stocké sur celui-ci et exécuté par un ordinateur, le programme donnant l'instruction à l'ordinateur d'effectuer le procédé selon les revendications précédentes.

# FIG.1

FIG.2

(a)    (b)    (c)

# FIG.3

(a)           (b)

EPIPOLAR LINE

$p(x,y)$

$q(x+d,y)$

$d$

# FIG.4

# FIG.5

# FIG.6

# FIG.7

(a)

(b)

# FIG.8

# FIG.9

## FIG.10

# FIG.11

(a)

REFERENCE
IMAGE                    ζ Ia

Os

(b)

COMPARISON
IMAGE                    ζ Ib

# FIG.12

(a)

REFERENCE
IMAGE                    ζ Ia

s(x-1,y)    p(x,y)

AGGREGATION
OF COSTS IN
LEFTWARD
DIRECTION

(b)

COMPARISON
IMAGE                    ζ Ib

d-1

q(x+(d-1),y)

d

FL(p)=1

# FIG.13

(a)

REFERENCE
IMAGE $\qquad$ Ia

p(x,y)   s(x+1,y)

← AGGREGATION OF
COSTS IN
RIGHTWARD
DIRECTION

(b)

COMPARISON
IMAGE $\qquad$ Ib

d

q(x+(d+1),y)

d+1

FR(p)=1

# FIG.14

# FIG.15

(a)

(b)

TL

TR

TLa  TLb

TRa  TRb

# FIG.16

# FIG.17

# FIG.18

# FIG.19

(a) ⎰ Ib

(b) ⎰ Ia

STEREO MATCHING

(c) ⎰ Ip

EP 2 913 998 B1

# FIG.20

START

GENERATE ANALOG IMAGE DATA　S1-1

GENERATE ANALOG IMAGE DATA　S1-2

CONVERTE IMAGE DATA INTO DIGITAL IMAGE DATA　S2-1

CONVERTE IMAGE DATA INTO DIGITAL IMAGE DATA　S2-2

OUTPUT DATA OF COMPARISON IMAGE　S3-1

OUTPUT DATA OF REFERENCE IMAGE　S3-2

CALCULATE COSTS C　S4

CALCULATE PATH COST Lr IN EACH DIRECTION BY AGGREGATING COSTS C, AND SET RELIABILITY FLAG　S5

CALCULATE SYNTHESIZED COST　S6

SUBPIXEL ESTIMATION　S7

GENERATE DISPARITY IMAGE　S8

END

# FIG.21

(a)

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012181142 A

### Non-patent literature cited in the description

- Stereo Processing by Semiglobal Matching and Mutual Information. **HIRSCHMUELLER H.** IEEE TRANSACTIONS ON PATTERN ANALYSIS AND MACHINE INTELLIGENCE. IEEE COMPUTER SOCIETY, 01 February 2008, vol. 30, 328-341
- Real-Time Stereo Matching Using Orthogonal Reliability-Based Dynamic Programming. **MINGLUN GONG et al.** IEEE TRANSACTIONS ON IMAGE PROCESSING. IEEE SERVICE CENTER, 01 March 2007, vol. 16, 879-884
- Advances in computational stereo. **BROWN M Z et al.** IEEE TRANSACTIONS ON PATTERN ANALYSIS AND MACHINE INTELLIGENCE. IEEE COMPUTER SOCIETY, 01 August 2003, vol. 25, 993-1008